Europäisches Patentamt

**European Patent Office**

Office européen des brevets

(19)

(11) Numéro de publication: **0 072 323**
**B1**

(12) # FASCICULE DE BREVET EUROPEEN

(45) Date de publication du fascicule du brevet:
**06.11.85**

(51) Int. Cl.⁴: **F 16 F 7/12,** B 64 C 25/58

(21) Numéro de dépôt: **82401479.9**

(22) Date de dépôt: **05.08.82**

(54) **Composants munis d'un dispositif d'absorption d'énergie par déformation plastique et/ou de limitation d'effort, et trains d'atterrissage d'aérodynes équipés de tels composants.**

(30) Priorité: **10.08.81 FR 8115432**

(43) Date de publication de la demande:
**16.02.83 Bulletin 83/7**

(45) Mention de la délivrance du brevet:
**06.11.85 Bulletin 85/45**

(84) Etats contractants désignés:
**DE GB IT**

(56) Documents cités:
**DE - A - 2 313 821**
**DE - A - 2 918 179**
**FR - A - 1 549 884**
**FR - A - 2 010 302**
**FR - A - 2 085 498**
**FR - A - 2 110 078**
**GB - A - 1 195 445**
**US - A - 2 752 112**

(73) Titulaire: **AEROSPATIALE Société Nationale Industrielle,
37 boulevard de Montmorency, F-75781 Paris
Cédex 16 (FR)**

(72) Inventeur: **Barnoin, Pierre, Les Blanoirs
Bouches-du-Rhône, F-13510 Equilles (FR)**
Inventeur: **Mens, Jacques Michel Norbert, Chemin du
Carestier Bouches-du-Rhône, F-13700 Marignane (FR)**
Inventeur: **Merle, Gilbert, 33 boulevard du Petit Lodi
Bouches-du-Rhône, F-13700 Saint-Victoret (FR)**

(74) Mandataire: **Lepeudry-Gautherat, Thérèse et al,
CABINET ARMENGAUD JEUNE CASANOVA et
LEPEUDRY 23 boulevard de Strasbourg, F-75010 Paris
(FR)**

## Description

La présente invention concerne des composants munis d'un dispositif d'absorption d'énergie par déformation plastique et/ou de limitation d'effort, ainsi que des trains d'atterrissage d'aérodynes équipés de tels composants.

Plus particulièrement, l'invention a pour objet des composants hydrauliques et/ou mécaniques, tels que vérin, amortisseur et contre-fiche, destinés à l'équipement des trains d'atterrissage d'hélicoptères, afin de donner à cas derniers une capacité communément désignée par les termes d'«anti-crash».

Par le brevet FR-A-1 549 884 et son certificat d'addition FR-A-2 010 302, on connaît déjà des dispositifs d'absorption d'énergie par déformation plastique et de limitation d'effort, comprenant des éléments de roulement, tels que des billes ou des galets, disposés entre deux organes télescopiques, de telle façon que lors d'un chic provoquant un déplacement télescopique des deux organes, les éléments de roulement provoquent une déformation plastique progressive de l'un au moins des deux organes télescopiques, du fait que les éléments de roulement sont serrés entre les organes télescopiques et sont réalisés en un matériau plus dur que le matériau constituant au moins l'organe qui se déforme, et dans lequel les éléments de roulement forment des rainures.

Selon le certificat d'addition précité, les éléments de roulement sont maintenus en des positions prédéterminées dans des perforations ménagées dans un manchon, monté coaxialement entre les organes télescopiques, de forme générale cylindrique, et adapté pour se déplacer avec ces éléments de roulement et pour maintenir un espacement prédéterminé entre eux pendant leur roulement résultant d'un déplacement relatif des organes télescopiques, de sorte que ce manchon fasse office de cage pour les éléments de roulement.

Dans ces dispositifs, le montage des éléments de roulement serrés entre les organes télescopiques est choisi pour charger en compression ces éléments de roulement entre des portions, le plus souvent cylindriques, des organes télescopiques, de telle sorte que ces éléments de roulement excercent, dans la zone de contact avec les organes télescopiques, une pression de contact moyenne de valeur supérieure à la pression de contact de déformation pour le matériau constituant au moins l'organe télescopique déformable, c'est-à-dire à la pression pour laquelle s'établit une répartition des contraintes menant à une déformation plastique dans la zone de contact, cette déformation plastique produisant une dissipation d'énergie élevée et localisée.

La valeur de la dissipation d'énergie par unité de déplacement des organes télescopiques dépend du degré ou de la profondeur de la déformation plastique, qui elle-même dépend de la charge des éléments de roulement, c'est-à-dire de leur nombre, du degré de serrage, défini à partir de la valeur dont la dimension radiale ou diamètre des éléments de roulement est supérieure à la différence entre les dimensions radiales ou rayons externe et interne des organes télescopiques dans la zone de contact avant déformation. Cette veleur de la dissipation d'énergie dépend également des duretés relatives des matériaux constituant les éléments de roulement et les organes télescopiques.

L'utilisation de tels dispositifs fournit des caractéristiques d'absorption d'énergie pouvant être prévues avec une grande précision. On peut ainsi obtenir une absorption constante le long de la course des organes télescopiques, si l'épaisseur de ces derniers et le degré de serrage sont maintenus constants. Il est également possible que l'un des organes télescopiques voire les deux, soit réalisé avec une dimension interne ou externe qui varie de façon continue, de manière à obtenir une pièce convergente ou divergente par exemple de sorte que les éléments de roulement rencontrent une résistance respectivement croissante ou décroissante lors d'un déplacement télescopique des organes. De même, l'épaisseur de paroi de l'un des deux organes peut varier le long de ces derniers pour présenter une résistance variable à la déformation plastique.

Dans l'application décrite dans les brevets précités, de ces dispositifs d'absorption d'énergie à l'équipement des colonnes de direction de véhicules, un arbre de direction, comprenant deux parties montées télescopiquement l'une dans l'autre et solidaires en rotation par des goupilles assurant simultanément le positionnement axial de ces deux parties dans une position relative de fonctionnement normal, est monté en rotation dans une enveloppe de support constituée d'une portion tubulaire inférieure, solidaire du châssis du véhicule, et montée télescopiquement dans une portion tubulaire supérieure, reliée au tableau de bord par une ferrure à rupture unidirectionnelle au moyen de goupilles. Entre les parties des portions tubulaires inférieure et supérieure qui se chevauchent, sont engagées deux rangées annulaires, décalées axialement, d'éléments de roulement répartis angulairement autour de la portion tubulaire inférieure et interne, et décalés angulairement d'une rangée par rapport à l'autre. En réponse à un choc axial, sollicitant en compression l'un ou l'autre des organes télescopiques, et développant sur les goupilles des efforts suffisants pour les cisailler, les deux parties constitutives de l'arbre de direction s'écrasent télescopiquement, de même que les deux portions tubulaires de l'enveloppe de support, ce qui provoque une déformation plastique de l'une au moins des portions tubulaires, et donc une dissipation importante d'énergie, de sorte que les efforts transmis par l'enveloppe support sont limités à une valeur très inférieure à celle du choc axial.

Par le brevet FR-A-2 110 078, on connaît également des dispositifs d'absorption d'énergie, dont la structure présente de nombreuses analogies avec celles des dispositifs précédemment considérés, puisqu'ils comprennent des moyens d'impression, se présentant également sous la forme de billes, galets, etc... mais aussi sous la forme d'un anneau, des moyens destinés à effectuer un déplacement relatif desdits moyens d'impression et d'un organe d'absorption d'énergie, se présentant sous la forme d'un manchon.

Les moyens destinés à effectuer un déplacement relatif comporte un organe de support, faisant face à l'organe d'absorption d'énergie, et portant, par exemple dans une chambre radiale présentant au moins une paroi conique en regard de ce dernier, les moyens d'impression, afinque ces derniers accompagnent le déplacement de l'organe support par rapport à l'organe d'absorption d'énergie, et soient repoussés dans ce dernier.

Mais le fonctionnement de ces dispositifs est fondamentalement différent de ceux préalablement considérés ci-dessus, dans la mesure où l'organe d'absorption d'énergie est un organe déformable élastiquement qualifié d'organe élastomère dans ce brevet FR-A-2 110 078, et agencé de manière à subir une déformation élastique localisée par compression ainsi qu'une compression et un allongement élastiques répartis latéralement par rapport à la zone de déformation élastique localisée.

L'organe d'absorption d'énergie, constitué par un manchon présentant des qualités élastomères, et réalisé notamment en caoutchoucs naturels ou au silicone, permet la réalisation d'un dispositif procurant les avantages d'un amortisseur hydraulique ou pneumatique, puisque les chocs et à-coups peuvent être absorbés, tout en ne présentant qu'une structure de prix de revient et de poids réduits.

Il est, par ailleurs, bien connu que les trains d'atterrisage d'aérodynes sont équipés de divers composants, tels que des vérins, des amortisseurs et des contre-fiches, que remplissent une fonction principale hydraulique et/ou mécanique, et qui comprennent chacun un élément tubulaire à l'intérieure duquel est reçu un élément télescopique, immobilisé vis-à-vis de l'élément tubulaire dans au moins une position d'utilisation normale du composant, par au moins un dispositif de verrouillage.

Il en est ainsi, par exemple, du vérin décrit dans DE-A-2 313 821, qui est un vérin hydraulique destiné à manoeuvrer un atterrisseur, et qui comprend un mécanisme interne de verrouillage de la tige du vérin en position sortie par rapport au cylindre du vérin. Le mécanisme interne de verrouillage comporte des griffes élastiques portées par le piston ou le cylindre du vérin, un redan de blocage porté respectivement par le cylindre ou le piston du vérin, et un piston de verrouillage, coulissant respectivement dans le cylindre ou autour de la tige, et rappelé élastiquement en position de verrouillage des griffes lorsque celles-ci sont bloquées derrière le redan. Ce mécanisme de verrouillage est à libération hydraulique, car le piston de verrouillage est repoussé à l'encontre du ressort de rappel par la pression de manoeuvre du vérin, du fait que la chambre du ressort est en communication avec la chambre du vérin dans laquel règne la pression la plus faible.

Dans des conditions anormales d'atterrisage, lorsqu'un tel vérin est amené à subir un effort supérieur à la charge de rupture du mécanisme de verrouillage, la tige tend à rentrer dans le cylindre, après la rupture du mécanisme de verrouillage, avec une vitesse très supérieure à celle pour laquelle sont dimensionnés les orifices d'alimentation et de vidange des chambres du vérin. Il se produit alors un blocage de la tige et du piston dans le cylindre, et une élévation de la pression interne pouvant conduire à l'éclatement du vérin. Mais, jusqu'à l'éclatement, le vérin transmet intégralement la charge anormalement élevée qu'il subit à la structure de l'aérodyne, ce qui entraîne l'endommagement de celle-ci, avec les risques qui en résultent pour les personnes embarquées dans l'aérodyne.

Le problème à la base de l'invention consiste à tirer partie de toute possibilité de course relative entre la tige et le cylindre d'un tel vérin, pour assurer une absorption et une dissipation d'énergie qui permet au vérin de ne transmettre à la structure de l'aérodyne qu'une fraction admissible de la charge trop élevée qui le sollicite, dans des conditions d'utilisation anormales.

La présente invention a pour but d'adapter des mécanismes d'absorption d'énergie par déformation plastique, du type de ceux décrits dans le FR-A-1 549 884 et son addition FR-A-2 010 302, dans des composants remplissant une fonction principale hydraulique et/ou mécanique, tels qu'un vérin de manoeuvre et/ou de contreventement, du type décrit dans DE-A-2 313 821, ou un amortisseur oléopneumatique, qui constitue déjà par lui-même un dispositif d'absorption et de dissipation d'énergie, ou encore une contre-fiche de contreventement d'un élément principal, de sorte que ces composants puissent remplir une fonction supplémentaire d'absorption d'énergie et/ou de limitation d'effort, dans un but de sécurité et de protection d'une structure à laquelle ils sont associés, et comprenant des parties auxquelles des efforts violents, résultant de chocs et d'à-coups portés sur la structure, ne doivent pas être transmis sans amortissement, atténuation ou limitation.

Il en est ainsi des aérodynes, dont les cellules doivent être, autant que possible protégées en cas d'accident, afin d'assurer au minimum la survie des personnels embarqués, et, éventuellement aussi, la préservation de la majeure partie de l'aérodyne, et l'invention a également pour but de concevoir des trains d'atterrissage d'aérodynes, en particulier d'hélocoptères, équipés de composants selon l'invention, et présentant une capacité «anti-crash».

A cet effet, un composant selon l'invention, remplissant une fonction principale hydraulique et/ou mécanique, du type vérin, amortisseur ou contre-fiche, et comprenant un élément tubulaire à l'intérieur duquel est reçu un élément télescopique immobilisé vis-à-vis de l'élément tubulaire dans au moins une position d'utilisation par au moins un dispositif de verrouillage, se caractérise en ce qu'il comprend également un dispositif d'absorption d'énergie par déformation plastique et/ou de limitation d'effort, comportant un ensemble d'éléments de roulement maintenu par une cage et interposé avec serrage entre un organe interne et un organe externe montés l'un dans l'autre, et dont au moins l'organe externe est un organe à charge de déformation plastique prédéterminée, lesdits organes étant susceptibles de coulisser l'un dans l'autre après rupture d'un élément frangible à charge de rupture prédéterminée et compris dans le dispositif de verrouillage, de sorte que les éléments de roulement provoquent, de façon ensoi connue, une dissipation d'énergie par déformation plastique d'au moins l'organe externe, qui est solidaire de l'élément tubulaire, l'élément télescopique constituant l'organe interne qui entraîne la cage de retenue des éléments de roulement.

Par camparaison avec le vérin décrit dans DE-A-2 313 821, un composant du type vérin selon l'invention permet, à partir de la position tige sortie et verrouillée, de profiter de toute la course possible de la tige dans le cylindre pour faire coopérer les éléments de roulement et les organes interne et externe du dispositif d'absorption d'énergie par déformation plastique, et donc pour dissiper une quantité importante d'énergie, dès que le fonctionnement du dispositif d'absorption d'énergie est déclenché par la rupture de l'élément frangible que comporte le dispositif de verrouillage du vérin.

Le seuil de rupture de l'élément frangible correspond à la charge maximale que le vérin peut transmettre à la structure de l'aérodyne sans l'endommager, cette charge maximale étant, bien entendu, supérieure aux charges subies par le vérin dans des conditions normales d'utilisation, et qui peuvent être transmises à la structure. Le seuil de rupture ainsi choisi pour l'élément frangible permet d'éviter tout blocage de la tige dans le cylindre et de commander une absorption d'énergie dès que cela est nécessaire pour que la structure ne soit pas surchargée.

Selon l'invention, l'organe externe déformable plastiquement est constitué soit par l'élément tubulaire lui-même, soit par un fourreau, doublant l'élément tubulaire à l'intérieur de ce dernier, sur au moins une partie de sa longueur, avec un jeu radial suffisant pour admettre la déformation plastique provoquée par les éléments de roulement, et amovible pour permettre la remise en état du composant par remplacement du fourreau et d'au moins l'élément frangible.

Selon l'invention, l'élément tubulaire peut être constitué par le corps, de forme générale cylindrique, d'une contre-fiche comprenant également une tige, constituant l'élément télescopique, montée coulissante dans le corps et immobilisée vis-à-vis de ce dernier dans une position initiale dans laquelle une partie de la tige pénètre dans le corps, au moyen d'au moins un boulon à tige partiellement filetée, vissé dans un taraudage radial traversant le corps à son extrémité traversée par la tige, et tel que l'extrémité de la tige du boulon pénètre dans un perçage radial de la tige de contre-fiche et constitue simultanément le dispositif de verrouillage et l'élément frangible à charge de rupture prédéterminée, la cage de retenue des éléments de roulement étant solidarisée sur l'extérieur de la partie de la tige interne au corps et les éléments de roulement étant en appui radial vers l'intérieur contre la tige et vers l'extérieur dans une empreinte de l'organe déformable plastiquement, constitué soit par le corps soit par le fourreau retenu par la tige partiellement filetée du ou des boulons contre la paroi interne du corps à l'extrémité de ce dernier traversée par la tige de la contre-fiche.

Selon que la tige de la contre-fiche est rigidement liée au corps respectivement en position rentrée, en position à demi-rentrée et en position sortie, le dispositif d'absorption d'énergie par déformation plastique de la contre-fiche peut être utilisé dans les cas d'une sollicitation supérieure au seuil de rupture de l'élément frangible respectivement en traction seulement, en traction ou en compression, et en compression seulement.

Selon l'invention, l'élément tubulaire peut encore être constitué par le cylindre d'un vérin hydraulique, comprenant une tige constituant l'élément télescopique, montée coulissante dans le cylindre et guidée dans ce dernier par un piston porté à son extrémité interne au cylindre, la tige du vérin étant immobilisée dans le cylindre dans au moins une position d'utilisation normale du vérin par un dispositif de verrouillage à griffes élastiques dont les têtes sont bloquées contre un redan sur la paroi interne du cylindre par au moins un piston de verrouillage, et dont les pieds sont solidaires d'un talon radial, constituant l'élément frangible à charge de rupture prédéterminée, et présentant une couronne extérieure séparée par une section de rupture d'une couronne intérieure entraînée par la tige de vérin en même temps que la cage des éléments de roulement portée autour de l'extrémité de la tige interne aucylindre de vérin.

Dans une forme de réalisation préférée du vérin selon l'invention, les éléments de roulement sont retenus radialement vers l'intérieur par un anneau monté coulissant entre la cage retenant les éléments de roulement et la tige de vérin, et présentant sur sa face extérieure une gorge servant au logement des éléments de roulement, en position d'utilisation du vérin, et se raccordant par une rampe inclinée à une portion cylindrique, l'anneau étant sollicité élastiquement vers la couronne extérieure de l'élément frangible pour provoquer, à la suite de la rupture de ce dernier, la sortie des éléments de roulement de la gorge et leur déplacement sur la rampe inclinée puis sur la portion cylindrique de l'anneau, lors d'un déplacement relatif de la cage entraînant les éléments de roulement et entraînée par la tige vis-à-vis de l'anneau, maintenu en butée contre la couronne extérieure de l'élément frangible avant que d'être entraîné avec la tige par la couronne intérieure de l'élément frangible, de sorte que les éléments de roulement sont déplacés radialement vers l'extérieur, en saillie par rapport à la cage, et sont susceptibles de provoquer des déformations plastiques de l'organe à charge de déformation plastique prédéterminée.

Selon l'invention, et dans le cas où l'organe déformable plastiquement est le cylindre du vérin lui-même, un chambrage est prévu à l'extrémité du cylindre entournant la cage, les éléments de roulement et l'anneau, en position d'utilisation normale du vérin, et s'étend axialement sur une distance autorisant la venue des éléments de roulement en saillie par rapport à la cage, à la suite de la rupture de l'élément frangible et d'un déplacement initial de la tige dans le cylindre du vérin.

Dans le cas où l'absorption d'énergie désirée conduit à une définition du cylindre du vérin incompatible avec sa fonction normale, celui-ci peut être doublé par un fourreau interne déformable, moulé avec un jeu radial suffisant pour admettre la déformation provoquée par les éléments de roulement.

Selon que l'élément frangible appartient au dispositif de verrouillage immobilisant la tige vis-à-vis du cylindre de vérin respectivement en position rentrée ou en position sortie, le dispositif d'absorption d'énergie par déformation plastique et/ou de limitation d'effort du vérin est sollicité respectivement en traction ou en compression par un effort qui peut être inférieur, égal ou supérieur au seuil de rupture de l'élément frangible.

Selon l'invention, l'élément tubulaire du composant peur également être constitué par le corps, présentant au moins une partie de forme générale cylindrique, d'un amortisseur comprenant également un cylindre, constituant l'élément télescopique, au moins partiellement logé dans la partie de forme générale cylindrique du corps, et immobilisé en position d'utilisation dans ce corps par au moins un boulon à tige partiellement filetée traversant un alésage radial ménagé dans le corps vissée dans un talon radial du cylindre, de façon à constituer simultanément le dispositif de verrouillage et l'élément frangible, une tige d'amortisseur étant montée coulissante avec étanchéité dans le cylindre de l'amortisseur, qui renferme de plus un dispositif élastique d'absorption d'énergie, susceptible de rappeler la tige en position initiale dans le cylindre, ainsi qu'un dispositif de dissipation d'énergie par laminage d'un volume d'huile hydraulique déplacé dans l'amortisseur par tout déplacement relatif de la tige et du cylindre.

Dans une forme préférée de réalisation, le talon radial externe, dans lequel est vissée l'extrémité filetée de la tige du ou des boulons, constitue simultanément la cage des éléments de roulement, retenue sur la paroi externe du cylindre de l'amortisseur. De préférence, les éléments de roulement sont en appui radial vers l'intérieur dans une gorge pratiquée sur la paroi externe du cylindre, et la cage, en position fixe par rapport à cette gorge, amène les éléments de roulement à coopérer avec l'organe déformable plastiquement constitué, dans ce cas également, soit par le corps de l'amortisseur lui-même, soit par un fourreau retenu par au moins le ou les boulons contre la paroi interne du corps.

On sait qu'en cas de choc ou d'impact à vitesse élevée sur un amortisseur, le laminage n'est plus possible et la tige est bloquée dans le corps de l'amortisseur. En conséquence, on choisit selon l'invention un seuil de déclenchement du dispositif d'absorption d'énergie par déformation plastique de l'amortisseur qui est supérieur aux·efforts subis par l'amortisseur dans des conditions de fonctionnement normales mais inférieur à un effort qui endommagerait la structure supportée par lamortisseur en cas de blocage de la tige dans le cylindre de ce dernier.

Les composants selon l'invention présentent l'avantage que la course utile de leurs dispositifs d'absorption d'énergie par déformation plastique et/ou de limitation d'effort est la même que celle de leur tige lorsque ces composants remplissent leur fonction principale, tout en ayant les avantages d'un montage en série. La longueur d'un composant selon l'invention n'est donc pas modifiée par l'adjonction de la fonction supplémentaire d'absorption d'énergie et/ou de limitation d'effort par rapport aux composants analogues de l'art antérieur.

Les trains d'atterrissage principaux pour aérodynes, en particulier pour hélicoptères, selon l'invention, comprenant, pour chaque atterrisseur, une jambe dont le fût est équipé d'un amortisseur muni d'une tige dont l'extrémité inférieure, en position d'atterrissage, est reliée à au moins un organe de contact avec le sol, tel qu'une roue, la jambe étant maintenue en position d'utilisation, sensiblement verticale, pour l'atterrissage et le décollage, par un dispositif de contreventement latéral et un dispositif de contreventement longitudinal, articulé chacun d'une part, sur la jambe et d'autre part, sur la structure d'aérodyne, se caractérisent en ce que leur amortisseur est un amortisseur selon l'invention, dont le corps constitue directement le fût de la jambe d'atterrisseur, et dont l'élément frangible à charge de rupture prédéterminée se rompt pour tout effort transmis par le cylindre d'amortisseur au fût de la jambe, qui est supérieur à un seuil témoignant d'un blocage de la tige d'amortisseur dans le cylindre, par suite de conditions anormales d'atterrissage, de sorte que le fonctionnement du dispositif d'absorption d'énergie par déformation plastique de l'amortisseur soit déclenché, et que la composante verticale, introduite dans la tige d'amortisseur et dont la valeur est susceptible d'endommager la structure de l'aérodyne, d'un effort sollicitant l'atterrisseur, ne soit pas transmise au fût de la jambe.

De préférence, le dispositif de contreventement latéral et/ou le dispositif de contreventement longitudinal des trains d'atterrissage selon l'invention comprennent au moins une contre-fiche et/ou un vérin selon l'invention, dont les dispositifs d'absorption d'énergie par déformation plastique respectifs se déclenchent lorsque la composante de l'effort, respectivement supportée par la contre-fiche et/ou le vérin selon la direction latérale ou longitudinale du contreventement que cette contre-fiche ou ce vérin assure, est supérieur au seuil de rupture de l'élément frangible, ce seuil correspondant à une valeur maximale admissible de cette compostante de l'effort dans des conditions normales d'atterrissage.

Avantageusement, le vérin de contreventement que comprend l'un des dispositifs de contreventement constitue simultanément un vérin·de manoeuvre, commandant la rotation de la jambe d'atterrisseur autour d'un axe de relevage, entre une position «train rentré» et une position «train sorti», ainsi, éventuellement que le verrouillage de la jambe dans ces deux positions, de sorte que les trains d'atterrissage selon l'invention soient du type dit relevable.

Les trains d'atterrissage relevables, selon l'invention, peuvent être du type dit à «balancier», dont la tige d'amortisseur est articulée, à son extrémité inférieure, sur un balancier portant à son extrémité postérieure l'organe de contact avec le sol, tel qu'une roue, et dont l'extrémité antérieure est montée pivotante sur une branche de compas reliant le balancier à une chape qui entoure le fût de la jambe et sur laquelle la branche de compas est elle-même montée pivotante. Les trains relevables à balancier selon l'invention se caractérisent en ce que la chape et le fût sont solidarisés en rotation par au moins un second élément frangible, à charge de rupture prédéterminée inférieure à la charge de rupture de l'élément frangible du dispositif de contreventement latéral, de sorte que si la composante transversale d'un effort sollicitant l'organe de contact avec le sol, et donc le balancier, dépasse une valeur maximale admissible, le second élément frangible se casse et désolidarise en rotation le fût et la chape, ce qui permet l'orientation de l'ensemble constitué par l'organe de contact avec le sol, le balancier et la tige d'amortisseur dans la direction de cette composante, qui est ensuite absorbée par le dispositif d'absorption d'énergie par déformation plastique du dispositif de contreventement latéral et/ou de l'amortisseur, si la valeur de cette composante est supérieure au seuil de l'élément frangible correspondant. Ce type de train d'atterrissage relevable à balancier peut être à relevage longitudinal. Dans ce cas le fût de la jambe de chaque atterrisseur est solidaite d'un axe de relevage transversal, monté pivotant sur la structure de l'aérodyne, et, selon l'invention, la manoeuvre de chaque atterrisseur et son contreventement longitudinal sont assurés par un vérin disposée selon une direction sensiblement longitudinale, le fût de la jambe étant monté pivotant sur l'axe de relevage autour d'un tourillon longitudinal, et le contreventement latéral étant assuré par une contre-fiche, disposée dans un plan transversal, de sorte qu'en dehors des manoeuvres du train, les jambes d'atterrisseurs puissent pivoter, à partir de la position train sortie, respectivement autour de l'axe de relevage transversal et du tourillon longitudinal, après les déclenchements respectifs des dispositifs d'absorption d'énergie par déformation plastique du vérin et de la contre-fiche.

Les trains d'atterrissage relevables selon l'invention peuvent également être du type dit à relevage transversal, dont le fût de la jambe de chaque atterrisseur est solidaire d'un axe de relevage longitudinal monté pivotant sur la structure de l'aérodyne. Selon l'invention, de tels trains se caractérisent en ce que la manoeuvre de chaque atterrisseur et son contreventement latéral sont assurés par un vérin disposé dans un plan sensiblement transversal, et en ce que le fût de la jambe est monté pivotant sur l'axe de relevage autour d'un trourillon transversal, et que le contreventement longitudinal est assuré par une contre-fiche disposée selon une direction sensiblement longitudinale, de sorte qu'en dehors des manoeuvres du train, les jambes d'atterrisseurs puissent pivoter, à partir de la position train sorti, respectivement autour de l'axe de relevage longitudinal et du tourillon transversal après les déclenchements respectifs des dispositifs d'absorption d'énergie par déformation plastique du vérin et de la contre-fiche.

Enfin, l'invention a également pour objet des trains d'atterrissage relevables, du type se relevant latéralement dans le fuselage, et comprenant pour chaque atterrisseur un vérin commandant la manoeuvre de la jambe autour d'un axe de relevage longitudinal solidaire de la structure de l'aérodyne. De tels trains selon l'invention se caractérisent en ce que la jambe d'atterrisseur est constituée d'un caisson, de forme générale triangulaire, pivotant autour de l'axe de relevage, et sur lequel est d'une part montée pivotant l'extrémité supérieure du fût de la jambe et d'autre part articulée une extrémité du vérin, de sorte que les dispositifs d'absorption d'énergie par déformation plastique de l'amortisseur et du vérin puissent être successivement utilisés pour l'absorption d'une composante verticale importante d'un effort sollicitant l'organe de contact avec le sol, et en ce que le contreventement latéral et le contreventement longitudinal sont assurés par une contre-fiche inclinée vers l'avant et une contre-fiche inclinée vers l'arrière de l'aérodyne par rapport au fût de la jambe.

La présente invention sera mieux comprise à l'aide des exemples particuliers de réalisation qui sont décrits ci-après, à titre non limitatif, en référence aux figures annexées dans lesquelles:

la figure 1 est une vue schématique d'un vérin muni d'un dispositif d'absorption d'énergie par déformation plastique et/ou de limitation d'effort destiné à être sollicité en traction,

les figures 2 et 3 sont des vues en coupe partielle d'une extrémité du vérin selon la figure 1, respectivement avant et après rupture de l'élément frangible,

la figure 4 est une vue analogue à la figure 1 pour un vérin dont le dispositif d'absorption d'énergie par déformation plastique et/ou de limitation d'effort est destiné à être sollicité en compression,

les figures 5 et 6 sont des vues analogues aux figures 2 et 3 pour le vérin selon la figure 4,

les figures 7 et 8 sont des vues en coupe partielle d'un amortisseur muni d'un dispositif d'absorption d'énergie par déformation plastique et/ou de limitation d'effort pour l'équipement, notamment d'une jambe d'atterrisseur,

la figure 9 est une vue en coupe selon IX-IX de la figure 8,

la figure 10 est une vue en coupe partielle d'une contre-fiche muni d'un dispositif d'absorption d'énergie par déformation plastique et/ou de limitation d'effort,

la figure 11 est une vue en perspective d'un atterrisseur latéral d'un train d'atterrissage principal à balancier et à relevage longitudinal vers l'arrière, équipé d'un vérin, d'un amortisseur et d'une contre-fiche selon les figures précédentes,

les figures 12, 13 et 14 sont des vues de côté de l'atterrisseur selon la figure 11 respectivement en position «train rentré», «train sorti» sous charge statique et «train sorti» après ou au cours d'une séquence d'absorption d'énergie et limitation d'effort consécutive à un atterrissage avec une vitesse verticale anormalement élevée,

les figures 15 et 16 sont des vues de face, respectivement en position «train rentré» et «train sorti» d'un atterrisseur latéral d'un train d'atterrissage principal de fuselage et à relevage latéral,

la figure 17 est une vue de côté de l'atterrisseur selon XVII-XVII de la figure 15, et

la figure 18 est une vue de face de l'atterrisseur des figures 15 à 17 sorti, après ou au cours d'une séquence d'absorption d'énergie et/ou de limitation d'effort consécutive à un atterrissage avec une vitesse verticale anormalement élevée.

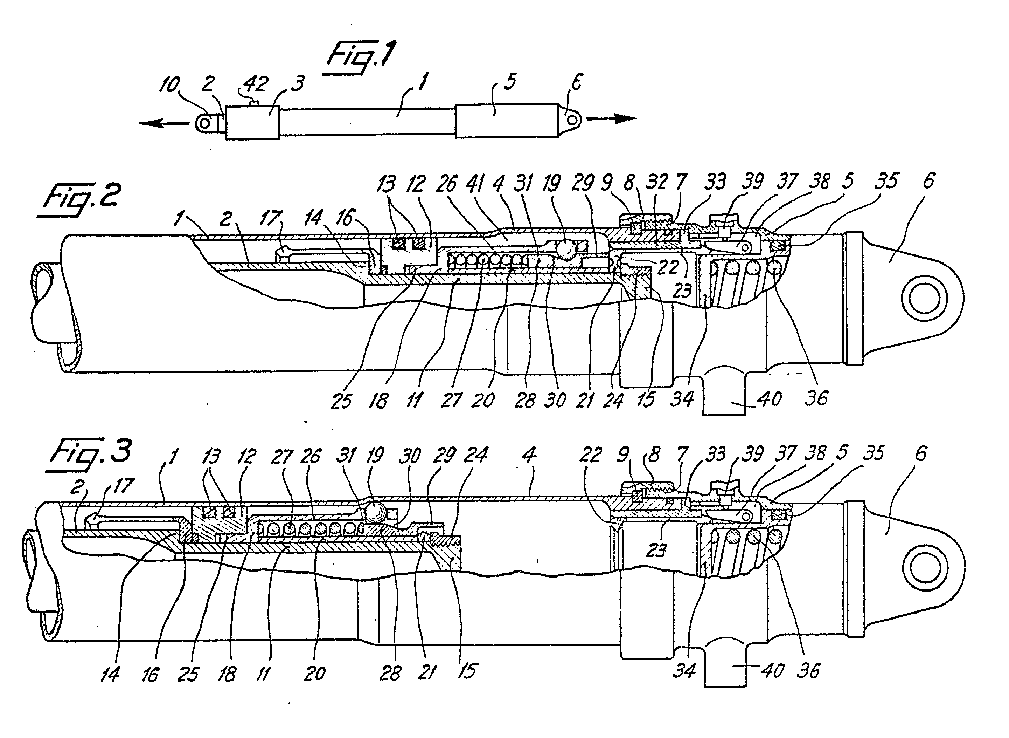

En référence aux figures 1 à 3, le vérin est constitué d'un cylindre 1, dans lequel est montée coulissante avec étanchéité une tige 2, guidée à l'extrémité 3 du cylindre 1 traversée par la tige 2 par une bague et au moins un joint d'étanchéité dynamique (non représentés). L'autre extrémité du cylindre 1, présentant une portion cylindrique de plus grand diamètre interne 4, est fermée par un embout creux 5. Cet embout 5 porte, à une extrémité, une attache 6, et présente à son autre extrémité un filetage externe sur une partie cylindrique 7 par laquelle l'embout 5 est monté autour de l'extrémité de la portion 4 du cylindre 1, et se trouve retenu sur cette dernière grâce à une bague 8 taraudée, retenue sur le cylindre 1 par une butée axiale 9 disposée dans une gorge sur la face extérieure du cylindre 1, un joint d'étanchéité étant interposé entre la partie 7 de l'embout 5 et la portion 4 du cylindre 1. La tige 2 est munie, à son extrémité externe au cylindre 1, d'une attache 10, et à son extrémité interne au cylindre 1, présentant une portion de plus petit diamètre externe 11, d'un piston 12, équipé de joints d'étanchéité dynamique 13, coulissant sur la paroi interne du cylindre 1 et guidant la tige 2 dans ses déplacements vis-à-vis de ce dernier. Sur la portion de plus petit diamètre externe 11 de la tige 2, sont successivement disposés, de l'épaulement radial 14 vers l'extrémité obturée et extérieurement filetée 15 délimitant la portion 11 de la tige 2, le talon radial interne 16 du pied d'un ensemble de griffes élastiques 17, destinées à s'encliqueter élastiquement derrière un redan prévu dans l'extrémité 3 du cylindre 1, pour assurer le verrouillage du vérin hydraulique en position «tige sortie» (de façon analogue à ce qui est décrit ci-après pour le verrouillage en position «tige rentrée», comme représenté sur la figure 2), puis le piston 12, une cage 18 pour des billes 19, une entretoise 20, la couronne intérieure 21 du talon radial interne du pied d'un ensemble de griffes élastiques 23, et enfin un écrou de retenue 24 vissé sur le filetage de l'extrémité obturée 15. La couronne intérieure 21 est séparée par une section à charge de rupture par cisaillement prédéterminée de la couronne extérieure 22 du talon radial interne, qui constitue ainsi un élément frangible, désigné ci-après par le terme de fusible mécanique. La cage 18 présente une partie cylindrique de plus petit diamètre interne 25, radialement disposée entre le piston 12 et la portion 11 de la tige 2, ainsi qu'une partie cylindrique de plus grand diamètre interne 26, présentant des perçages radiaux centrés dans un plan diamétral et dans chacun desquels est reçue une bille 19, et entourant un ressort 27 disposé lui-même autour de l'entretoise 20. Le ressort 27 prend appui par l'une de ses extrémités contre la partie radiale de la cage 18 séparant les deux parties cylindriques 25 et 26 de cette dernière et, par son autre extrémité, contre un anneau 28. L'anneau 28, de forme extérieure cylindrique, monté coulissant autour de l'entretoise 20, se trouve muni d'une queue 29 d'appui contre la couronne extérieure 22 du fusible mécanique, et présente sur sa face externe une gorge 30, de section en partie circulaire raccordée par une surface conique à une surface externe cylindrique 31 de l'anneau 28, dirigée vers la face de ce dernier contre laquelle prend appui le ressort 27.

Le blocage de la tige 2 en position rentrée dans le cylindre 1 est assuré par l'encliquetage élastique des têtes des griffes 23 derrière un redan, constitué par l'extrémité d'un manchon 32, s'étendant dans le cylindre 1, radialement disposé entre un partie d'extrémité de la portion 4 de ce dernier et l'ensemble des griffes 23, et maintenu en position par son épaulement radial externe 33 serré entre un épaulement radial de l'embout 5 et l'extrémité de la portion 4 du cylindre 1. Le verrouillage des griffes 23 dans cette position tige rentrée est assuré par un dispositif d'arrêt, comprenant un piston de verrouillage 34, monté coulissant avec étanchéité dans un alésage de l'embout 5, grâce au joint d'étanchéité 35, et poussé par un ressort 36 prenant appui contre le fond fermé de l'embout 5, vers l'intérieur du cylindre 1, jusqu'à venir se loger à l'intérieur des têtes des griffes 23, pour empêcher ces dernières de se dégager de l'extrémité du manchon 32. Le dispositif d'arrêt est associé à un dispositif de contrôle de verrouillage comportant un taquet 37, monté pivotant par une extrémité dans une chambre médiane 38 de l'embout 5, et dont l'autre extrémité est appliquée contre la tête d'une des griffes 23.

Celles-ci, lors du verrouillage, déplacent le taquet 37 lequel actionne un contacteur 39. Un voyant placé au poste de pilotage permet à l'équipage de contrôler le verrouillage tige rentrée.

La mise sous pression de la chambre 38 de l'embout 5 au travers du raccord 40 d'alimentation en huile hydraulique repousse le piston 34 vers le fond dudit embout, contre le ressort 36 et assure successivement le déverrouillage des griffes 23, un déplacement initial de la tige 2 avec les griffes 23 libérées dans le cylindre 1, vers la position tige sortie, et l'alimentation en huile sous pression de la chambre définie par le cylindre 1, la tige 2 et le piston 12, ce qui provoque la sortie de la tige, qui est verrouillée en fin de course, en position tige sortie, par coopération des griffes 17 avec un dispositif d'arrêt analogue à celui venant d'être décrit, mais disposé dans l'extrémité 3 du cylindre 1, traversée par la tige 2, et donc dans lequel le piston de verrouillage est un piston annulaire.

Le vérin hydraulique qui vient d'être décrit, à verrouillage mécanique et à déverrouillage hydraulique dans les deux positions en fin de course, est destiné à être solidarisé par l'attache 6 de son cylindre 1 et l'attache 10 de sa tige 2 à deux éléments, que le vérin doit en certaines circonstances déplacer l'un par rapport à l'autre et, en d'autres circonstances maintenir rigidement positionnés l'un par rapport à l'autre, lorsqu'il est en configuration tige rentrée, à l'encontre d'une charge sollicitant l'un des deux éléments. Lorsque cette dernière est une charge provoquant la sollicitation en traction du vérin, avec une valeur supérieure à un effort maximum admissible, pouvant être transmis par le vérin de l'un à l'autre des éléments, sans risque d'endommager l'un de ces derniers, il est clair que le vérin doit permettre de limiter l'effort transmis à une valeur acceptable prédéterminée, et donc d'absorber et de dissiper une certaine quantité d'énergie en excès. Ceci est obtenu en calibrant la section de rupture à charge de cisaillement prédéterminée, qui sépare les deux couronnes intérieure 21 et extérieure 22 de l'élément frangible, à la valeur de l'effort maximum de traction pouvant être transmis, constituant la valeur de déclenchement du fonctionnement du dispositif d'absorption d'énergie par déformation plastique, dont est équipé le vérin.

Dans le cas où l'effort de traction sur le vérin atteint la valeur de déclenchement prédéterminée, la section de rupture se rompt et la couronne intérieure 21 se sépare de la couronne extérieure 22 du talon des griffes 23, maintenues en place par le dispositif d'arrêt. La tige 2 commence un déplacement de sortie du cylindre 1, tandis que le ressort 27 se détend en maintenant l'anneau 28 en butée par sa queue 29 contre la couronne extérieure 22. Cependant, comme la cage 18 est entraînée avec la tige 2 par l'intermédiaire de l'entretoise 20, de la couronne intérieure 21 et de l'écrou 24, la partie 26 de la cage 18 est donc déplacée axialement par rapport à l'anneau 28, et provoque la sortie des billes 19 hors de la rainure 30, grâce à la surface conique qui la raccorde à la surface externe cylindrique 31 de l'anneau 28, sur laquelle les billes 19 viennent reposer. Le dispositif d'éjection des billes 19 ainsi réalisé permet de faire saillir ces dernières dans le chambrage 41 délimité par la portion d'extrémité 4 de plus grand diamètre interne du cylindre 1, après la rupture de l'élément frangible. Sous l'effet de la traction, la tige 2 se déplace ensuite dans le cylindre 1, en entraînant les billes 19, positionnées par la cage 18 de façon à prendre appui radialement vers l'intérieur sur la partie cylindrique 31 de l'anneau 28. Comme les billes 19 ont un diamètre supérieur, d'une valeur déterminée, à la différence entre le rayon interne du cylindre 1, dans sa partie médiane de plus petit diamètre interne, et le rayon de la surface cylindrique 31 de l'anneau 28, lorsqu'elles arrivent à la fin du chambrage 41, elles déforment plastiquement le cylindre 1 du vérin, sur le restant de la course de la tige 2 dans le cylindre 1, comme cela est représenté sur la figure 3, ce qui provoque une absorption et une dissipation d'énergie permettant de limiter à une valeur acceptable l'effort transmis par le vérin, tout au moins tant que dure la déformation.

La quantité d'énergie absorbée est déterminée notamment par l'importance de l'empreinte des billes 19, par leur nombre et par l'épaisseur du cylindre 1, ainsi que par les duretés relatives des matériaux choisis pour réaliser ces éléments. Si l'absorption d'énergie doit être constante, la déformation sera constante tout le long de la course des billes 19, en utisilant un cylindre de section et d'épaisieur constantes, mais si l'on désire une absorption variable le long de la course des billes 19, le cylindre peut être d'épaisseur variable adapté au profil désiré.

Si les effets désirés conduisent à une définition du cylindre 1 incompatible avec l'exercice de sa fonction normale de cylindre d'un vérin hydraulique d'une cylindrée adaptée, compte tenu de la pression hydraulique régnant dans le circuit hydraulique d'alimentation, aux efforts à développer pour manoeuvrer sur une course voulue et bloquer en position les deux éléments auxquels le vérin est relié, le cylindre 1 peut être doublé par un fourreau interne, déformable plastiquement dans les mêmes conditions, et moulé avec un jeu radial suffisant pour admettre la déformation plastique provoquée par les billes 19.

Le vérin venant d'être décrit a pour avantage que la course des billes 19 est pratiquement la même que celle de la tige 2 dans le cylindre 1, tout en présentant les avantages d'un montage en série d'un dispositif combiné remplissant les fonctions de vérin et d'absorption d'énergie et/ou de limitation d'effort. La longueur du vérin n'est donc pas modifiée par l'adjonction d'une fonction supplémentaire d'absorption d'énergie et/ou de limitation d'effort à sa fonction principale.

Par ailleurs, il faut noter qu'une membrane tarée ou un clapet de surpression 42 est disposé dans l'extrémité 3 du cylindre 1, traversée par la tige 2, de façon à autoriser la purge vers l'extérieur du vérin de la chambre annulaire définie entre le cylindre 1 et la tige 2, par le piston 12 et l'extrémité 3 du cylindre 1, de sorte que l'huile remplissant cette chambre ne s'oppose pas au déplacement du piston 12 avec la tige 2 dans le cylindre 1, après rupture de l'élément frangible et lors du déplacement des billes 19 déformant plastiquement le cylindre 1.

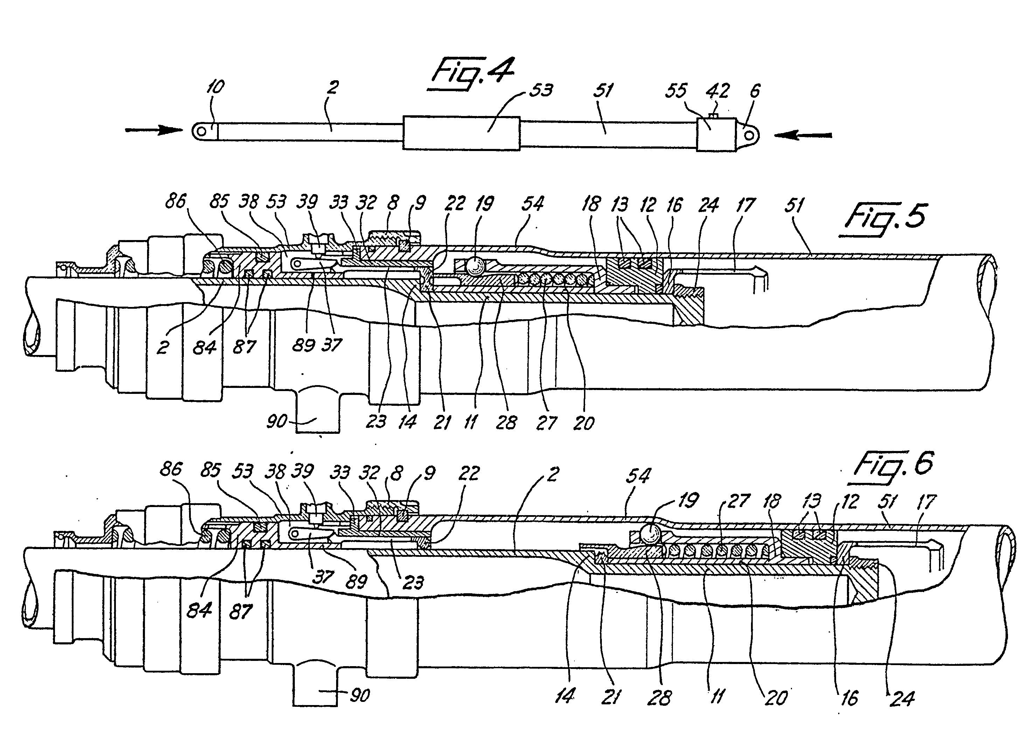

Sur les figures 4 à 6, on a représenté un vérin muni d'un dispositif d'absorption d'énergie et/ou de limitation d'effort destiné à être sollicité en compression, à partir de la position tige sortie, par un effort supérieur à une valeur maximale admissible.

Les éléments de ce vérin identiques à ceux du vérin décrit en référence aux figures 1 à 3 sont repérés par les mêmes références.

Il faut noter, en particulier, que la tige 2 est identique, mais que l'ensemble des pièces qu'elle porte sur sa partie d'extrémité 11, de plus petit diamètre externe, est disposé en sens opposé, de sorte que les griffes 23, munies à leur pied d'un talon radial constituant l'élément frangible par ses couronnes intérieure 21 et extérieure 22, puissent être verrouillées par un dispositif d'arrêt reçu dans l'embout 53 de l'extrémité du cylindre 51 traversée par la tige 2. C'est donc la couronne intérieure 21 qui est serrée entre l'épaulement 14 de la tige 2 et l'entretoise 20, tandis que le talon radial interne 16 des griffes 17 est serré entre le piston 12 et l'écrou 24, la cage 18, les billes 19, l'anneau 28 et le ressort 27 occupant vis-à-vis du piston 12 et de la couronne intérieure 21 les mêmes positions relatives que précédemment, et l'ensemble constituant un système d'éjection des billes 19 en saillie dans le chambrage délimité par la portion de plus grand diamètre interne 54 du cylindre 51, après rupture de l'élément frangible.

Le dispositif d'arrêt, reçu dans l'embout 53, comprend un piston de verrouillage 84 annulaire, monté coulissant avec étanchéité à l'intérieur d'un alésage de l'embout 53 grâce au joint 85 et autour de la tige 2 grâce aux joints 87, et sollicité par un ressort 86 de sorte que le prolongement axial 89 du piston 84 vienne bloquer les griffes 23 derrière le redan du manchon 32, dont le talon radial 33 est serré contre l'extrémité de la portion 54 du cylindre 51 par l'embout 53. Ce dernier présente une chambre médiane 38, dans laquelle est monté pivotant le taquet 37, sollicitant le contacteur 39 lors du verrouillage des griffes 23, ainsi qu'un raccord d'alimentation 90 en huile hydraulique pour commander le déverrouillage hydraulique et la manoeuvre du vérin.

Le fonctionnement de ce vérin est en tout point analogue à celui du vérin décrit en référence aux figures 1 à 3, mis à part que le dispositif d'absorption d'énergie et/ou de limitation d'effort est déclenché par un effort de compression supérieur à la charge de rupture en cisaillement prédéterminée de la section séparant les couronnes extérieure 22 et intérieure 21 de l'élément frangible, et s'exerçant sur le vérin verrouillé en configuration tige sortie. En conséquence, la membrane tarée ou le clapet de surpression symbolisé en 42 est prévu sur l'embout 55 de l'extrémité du cylindre 51 non traversée par la tige 2, pour autoriser la vidange du cylindre 51 lors de la rentrée de la tige 2 après rupture de l'élément frangible.

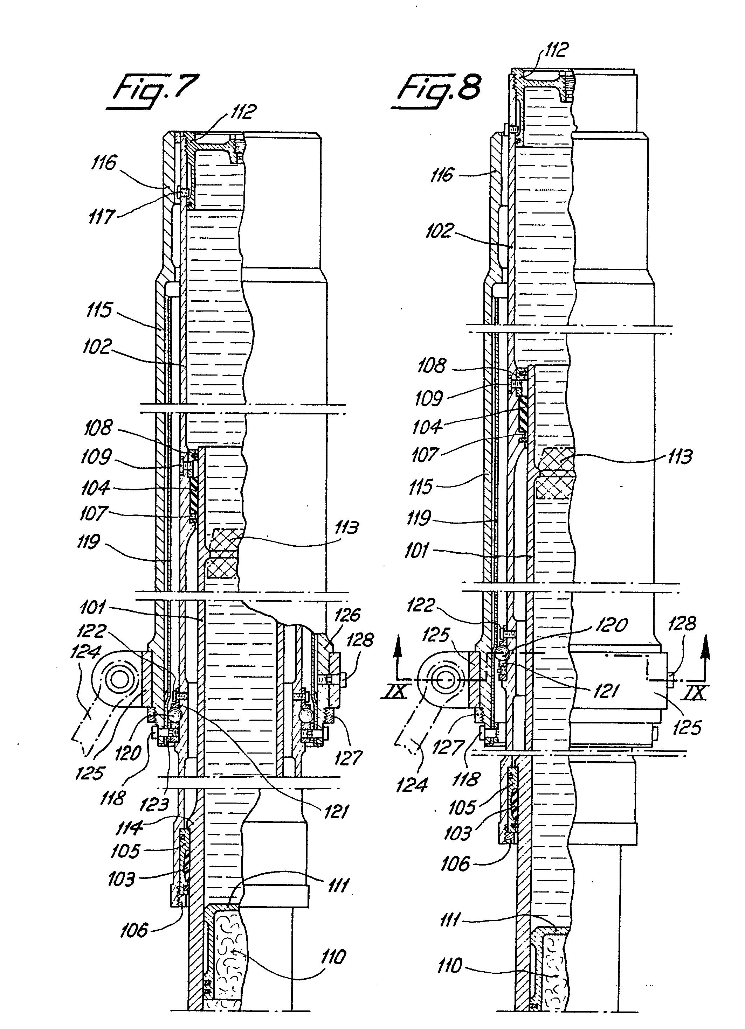

En référence aux figures 7 à 9, un amortisseur oléopneumatique selon l'invention comporte une tige 101, montée coulissante avec étanchéité dans un cylindre 102 sensiblement vertical, et guidée grâce aux bagues 103 et 104. La bague 103 est disposée dans une gorge ménagée sur la face interne d'un fourreau cylindrique 105, retenu dans un chambrage prévu à l'extrémité inférieure du cylindre 102 par un écrou 106, tandis que la bague 104 est retenue contre un épaulement radial 107, qui est usiné dans un bossage présenté par le cylindre 102 sur sa paroi interne, sensiblement à mi-hauteur, par une butée axiale annulaire 108, dans laquelle sont vissés des écrous 109 traversant des alésages radiaux percés dans le cylindre 102. La tige 101 renferme, à sa partie inférieure, une chambre de gaz sous pression 110, par exemple une chambre d'azote, séparée par un piston séparateur 111, monté coulissant avec étanchéité dans la tige 101, d'un volume d'huile remplissant le reste de la tige 101 ainsi que la partie du cylindre 102 située au-dessus de la bague 104, le cylindre 102 étant fermé par un couvercle 112 vissé dans son extrémité supérieure. La tige 101 porte, dans sa portion d'extrémité supérieure, un dispositif de dissipation d'énergie par laminage d'huile 113, représenté de façon symbolique, car ce dispositif peut être constitué par tour dispositif de laminage connu: orifices permanents, du type diaphragme, obturables par clapet, éventuellement piloté en fonction de la pression ou de la vitesse de déplacement de la tige 101 dans le cylindre 102, les orifices étant à sections constantes ou variables en fonction de la vitesse et/ou du sens de déplacement de la tige dans le cylindre, ou encore orifice central ménagé dans une paroi transversale de la tige 101 et traversé par une contre tige de section variable portée par le couvercle 112, de sorte que la section de passage varie en fonction de la course de la tige dans le cylindre.

En l'absence de charge sur l'amortisseur, la chambre de gaz sous pression 110 tend à repousser l'huile de la tige 101 dans le cylindre 102 au travers du dispositif le laminage 113, ce qui assure la sortie de la tige 101 hors du cylindre 102, jusqu'à la position maximale tige sortie représentée sur la figure 7, dans laquelle l'épaulement radial externe 114 de la tige 101 vient en butée contre le fourreau 105.

Sous charge, la tige 101 est poussée vers l'intérieur du cylindre 102, de sorte que l'huile du cylindre 102 est chassée dans la tige 101, au travers du dispositif 113 assurant par laminage la dissipation d'une certaine quantité d'énergie, et vient comprimer la chambre de gaz 110, qui absorbe élastiquement une autre quantité d'énergie, restituée au moins partiellement par la suite pour ramener la tige 101 dans une position d'équilibre sous la charge dans le cylindre 102.

Le cylindre 102 est lui-même reçu coaxialement dans un corps 115, de forme générale cylindrique, présentant une portion supérieure de plus petit diamètre interne 116, dans laquelle le cylindre 102 est positionné en rotation grâce à une raînure pratiquée dans le corps 116 et à une vis 117 dans le cylindre 102. Au voisinage de l'extrémité inférieure du corps 115, une pluralité de boulons 118, dont l'extrémité de la tige est filetée, traversent chacun un alésage radial ménagé dans le corps 115 ainsi qu'un perçage dans la partie inférieure de plus grand diamètre interne d'un fourreau déformable plastiquement 119, doublant le corps 115 de long de la paroi interne de la portion de plus grand diamètre interne de ce dernier, avec un jeu radial suffisant pour permettre la déformation plastique de ce fourreau 119 par des billes 120, retenues par une cage 121 vissée sur la face externe du cylindre 102 par des boulons 122, et dans laquelle se visse l'extrémité filetée de la tige des boulons 118, laquelle est séparée de la partie non filetée par une section à charge de rupture en cisaillement prédéterminée, ou section frangible, de sorte que la tige des boulons 118 constitue un fusible mécanique pour les déplacements axiaux du cylindre 102 dans le corps 115. La partie non filetée de la tige des boulons 118 traverse également un anneau de centrage 123, disposé entre le fourreau 119 et la cage 121. Comme cela apparaît sur les figures 7 et 8, les billes 120 sont en appui radial vers l'intérieur dans une gorge ménagée autour du cylindre 102, et leur diamètre est supérieur à la différence entre le rayon de la partie de plus petit diamètre interne du fourreau 119 et le rayon à fond de gorge du cylindre 102.

Pour les cas où la tige 101 doit être guidée en translation dans le cylindre 102 sans rotation par rapport à ce dernier, un compas, dont une branche (non représentée) est reliée à la partie inférieure de la tige 101, a son autre branche 124 articulée sur une chape 125 qui est retenue autour de la partie inférieure du corps 115, entre un épaulement 126 de ce dernier et un écrou 127, et solidaire en rotation du corps 115 grâce à un boulon 128, dont la tige présente une partie non filetée, traversant un alésage radial de la chape 125, séparée d'une partie d'extrémité filetée et vissée dans le corps 115 par une section à charge de rupture en cisaillement prédéterminée, ou section frangible, de sorte que la tige du boulon 128 constitue un fusible mécanique pour les rotations de la tige 101 dans le corps 115.

En cas de choc ou de charge exercé sur la tige 101 et tendant à rentrer cette dernière dans le cylindre 102 avec une vitesse telle que la section de passage de l'huile au travers du dispositif de laminage 113 est nettement insuffisante, le laminage ne peut s'effectuer dans de bonnes conditions, compte tenu des faibles débits possibles, et la tige 101 est comme bloquée dans le cylindre 102. L'amortisseur se comporte alors pratiquement comme une bielle rigide de longueur constante, transmettant au corps 115, et donc à la masse suspendue, l'intégralitée de l'effort auquel est soumise la tige 101 à son extrémité inférieure.

Lorsque cet effort transmis atteint la valeur de déclenchement du dispositif d'absorption d'énergie et/ou de limitation d'effort, dont est équipé l'amortisseur, c'est-à-dire la valeur prédéterminée de la charge de rupture en cisaillement des tiges des boulons 118, ces dernières se rompent et le cylindre 102 coulisse dans le corps 115 en entraînant les billes 120 par l'intermédiaire de la cage 121. Les billes 120 déforment plastiquement le fourreau 119 de long de ses génératrices, ce qui provoque une absorption et une dissipation d'énergie, qui peut être ajustée à une valeur choisie, dans les mêmes conditions que précédemment, en jouant sur le nombre des billes, leur diamètre, leur dureté et celle du fourreau, ainsi que sur l'épaisseur et le profil de ce dernier. L'effort transmis de la tige 101 au corps 115 peut ainsi être limité à une valeur acceptable.

Lorsque la tige 101 est sollicitée en torsion par rapport au cylindre 102, et donc par rapport au corps 115, au-delà de la charge de rupture de la tige du boulon 128, cette dernière se casse, puisque le moment de torsion est transmis par le compas à la chape 125, et la chape 125 peut ensuite librement tourner autour du corps 115.

On constate que l'amortisseur présente comme avantage que la course du dispositif d'absorption d'énergie n'est que peu inférieure à la longueur du corps 115, et que celle-ci n'est pas modifiée par l'adjonction de la fonction supplémentaire d'absorption d'énergie et/ou de limitation d'effort.

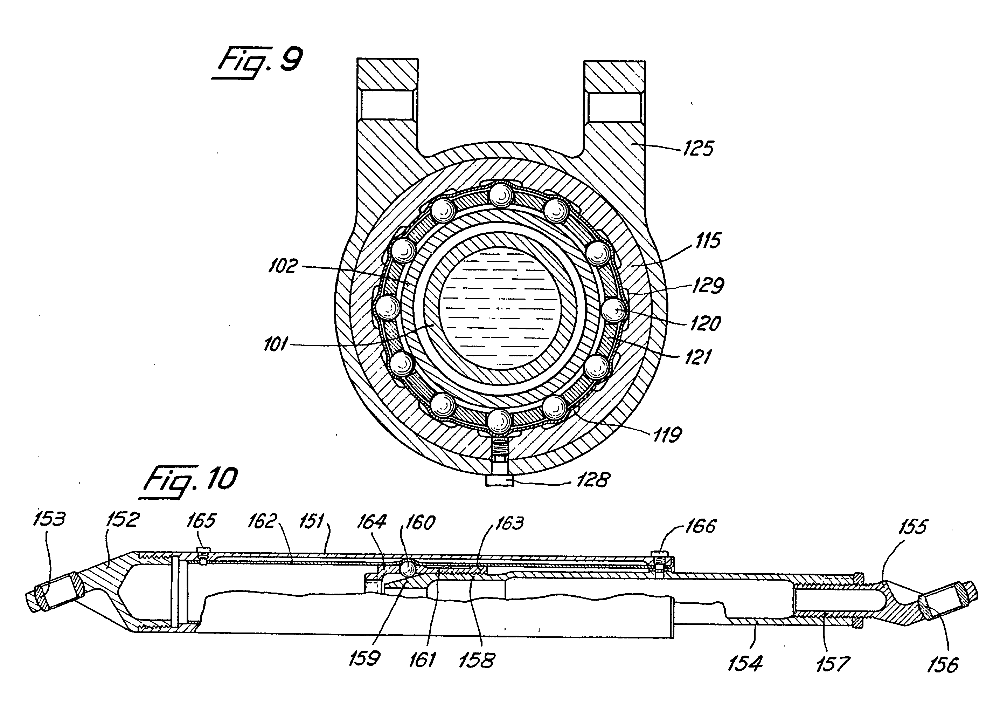

Comme cela apparaît sur la figure 9, le corps 115 peut présenter, sur sa paroi interne, des rainures longitudinales 129 dans lesquelles s'effectuera la déformation plastique du fourreau 119, par ailleurs en appui radialement vers l'extérieur sur les bossages du corps 115 séparant les rainures 129 les unes des autres.

La contre-fiche représentée sur la figure 10 est constituée d'un corps 151, de forme cylindrique, dont une extrémité est fermée par un embout 152, vissé dans le corps 151, et muni d'un dispositif de liaison mécanique tel qu'une rotule 153, et dont l'autre extrémité est traversée par une tige 154. Cette tige 154, dont l'extrémité externe au cylindre 151 porte également un embout 155, muni d'une rotule 156, et vissé dans la tige 154 de manière réglable pour ajuster la longueur de la contre-fiche à une dimension voulue, grâce à sa partie filetée 157, présente à l'intérieur du cylindre 151, une portion cylindrique de plus petit diamètre interne 158, extérieurement filetée, se prolongeant par une portion d'extrémité conique 159. Sur cette dernière prennent appui des billes 160, retenues dans une cage tubulaire 161, vissée sur le filetage de la portion cylindrique 158 de la tige 154, et coulissant à l'intérieur d'un fourreau déformable plastiquement 162, serti sensiblement en son milieu autour de la partie des billes 160 qui dépasse de la cage 161, et doublant le corps 151 à l'intérieur de ce dernier avec un jeu radial suffisant pour permettre sa déformation plastique, avec absorption et dissipation d'énergie, lorsque les billes 160 sont déplacées avec la tige 154 par l'intermédiaire de la cager 161, dans l'une ou autre direction dans le corps 151. Pour favoriser le guidage lors d'un déplacement en direction tige sortie ou en direction tige rentrée, la cage 161 présente respectivement une partie cylindrique d'extrémité 163 ou 164, coulissant à l'intérieur du fourreau 162 avant sa déformation. Le fourreau 162 est maintenu en position axiale dans le cylindre 151 par des boulons 165, à tige partiellement filetée, vissée dans un alésage du cylindre 151 à son extrémité voisine de l'embout 152, et par des boulons 166, à tige partiellement filetée vissée dans un alésage radial du cylindre 151 à son extrémité traversée par la tige 154, les parties non filetées des tiges des boulons 165 et 166 traversant des perçages ménagés dans les extrémités en regard du fourreau 162. La partie non filetée de la tige des boulons 166 présente de plus une section frangible, à charge de rupture en cisaillement prédéterminée, de sorte qu'elle constitue un fusible mécanique. L'extrémité de ces tiges pénètrent dans un perçage radial de la tige 154, de sorte que les boulons 166 assurent le blocage axial en position initiale de la tige 154 dans le cylindre 151.

La contre-fiche est donc constituée d'une tige 154 bloquée en position demi-sortie dans le cylindre 151 par des fusibles mécaniques, dont la rupture s'effectue à une valeur prédéterminée de la sollicitation en compression ou en traction s'exerçant sur la contre-fiche, et correspondant à la valeur de déclenchement du dispositif d'absorption d'énergie et/ou de limitation d'effort par déformation plastique du fourreau 162 par les billes 160.

Il est clair que dans cette configuration, la course du dispositif d'absorption d'énergie est limitée sensiblement à la moitié de la longueur du corps 151.

Mais si le dispositif d'absorption d'énergie de la contre-fiche est destiné à n'être sollicité respectivement qu'en compression ou qu'en traction, la tige 154 peut être bloquée en position initiale respectivement tige sortie ou tige rentrée par les boulons 166, de sorte que pratiquement toute la longueur du cylindre 151 puisse être utilisée comme course du dispositif d'absorption d'énergie. Bien entendu le fourreau 162 est alors serti sur les billes 160 par son extrémité correspondant.

Si on le désire, il est également possible de supprimer le fourreau 162, qui présente l'avantage de pouvoir être remplacé après déformation, et de réaliser la contre-fiche de sorte que les billes 160 déforment plastiquement le cylindre 151.

Le vérin, l'amortisseur et la contre-fiche qui viennent d'être décrits en référence aux figures 1 à 10 sont bien adaptés à l'équipement des trains d'atterrissage des aérodynes, et en particulier des hélicoptères, auxquels ces composants permettent de donner une aptidute «anti-crash».

En utilisation normale, et avant l'atterrissage, les jambes des atterrisseurs doivent être maintenues rigidement en position par rapport à une cellule à laquelle elles sont liées directement ou indirectement, et ce n'est qu'après le décollage que les atterrisseurs peuvent être, éventuellement, relevés soit dans la voilure, soit dans le fuselage de l'aérodyne, soit encore dans des moignons d'ailes ou ailettes ou des caissons de fuselage, prévus latéralement à la partie inférieure de ce dernier. Le positionnement rigide des jambes d'atterrisseur, qui portent l'organe de contact avec le sol, tel qu'une roue, un patin ou un ski, par l'intermédiaire d'un dispositif de suspension, par exemple un amortisseur oléopneumatique logé dans le fût de la jambe d'atterrisseur et absorbant l'énergie d'impact, est généralement assuré au moyen de contre-fiches, mécaniques ou hydrauliques, de longueur constante ou télescopique, et de vérins, hydrauliques ou mécaniques voire même électriques, susceptibles de faire office d'organes de contreventement, comme une contre-fiche, et/ou d'organes de manoeuvre.

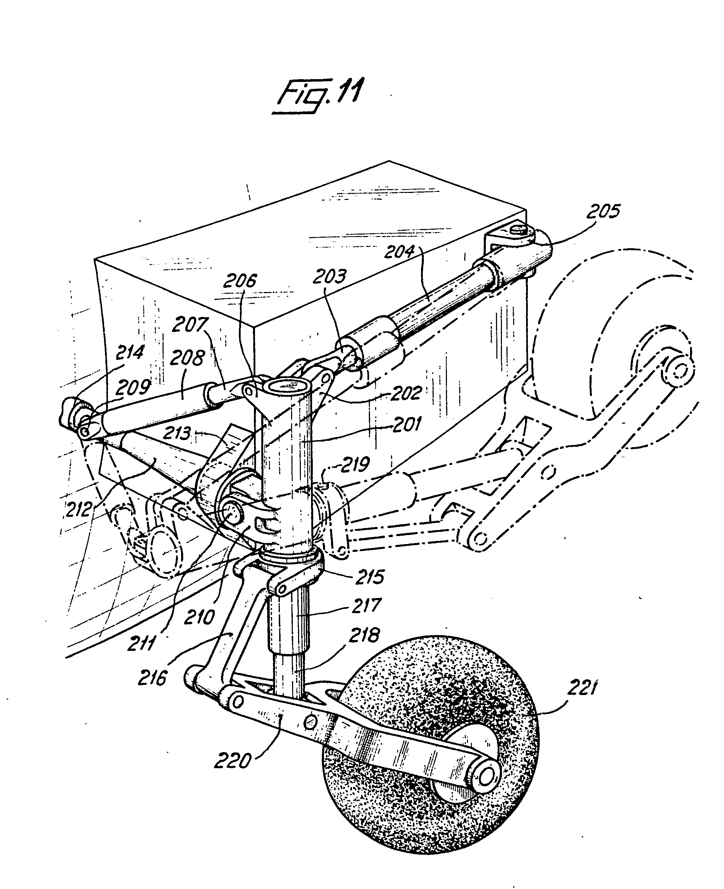

L'atterrisseur gauche, représenté sur les figures 11 à 14, d'un train d'atterrissage principal pour hélicoptère, dont l'atterrisseur droit est symétrique par rapport au plan longitudinal de symétrie de l'hélicoptère, est du type dit «à balancier» et à relevage longitudinal vers l'arrière dans un moignon d'aile ou ailette ou dans un caisson de fuselage. Cet atterrisseur comprend une jambe sensiblement verticale en position train sorti, dont le fût est constitué par le corps 201 d'un amortisseur tel que celui décrit précédemment en référence aux figures 7 à 9, et qui présente, à son extrémité supérieure, une attache longitudinale 202 sur laquelle est montée pivotante l'extrémité libre de la tige 203 d'un vérin, disposé selon une direction sensiblement longitudinale, et tel que celui décrit précédemment en référence aux figures 1 à 3, et dont le cylindre 204 est monté pivotant sur une attache 205, solidaire de la structure de l'ailette de l'hélicoptère, en arrière du plan transversal passant par le corps 201 en position train sorti. Le corps 201 présente également à son extrémité supérieure une attache transversale 206 dirigée vers la cellule de l'hélicoptère, et sur laquelle est articulée l'extrémité de la tige 207 d'une contre-fiche telle que celle précédemment décrite en référence à la figure 10, disposée dans un plan transversal, et dont le cylindre 208 est articulé en 209 sur la structure de l'ailette, au voisinage d'un axe de relevage 212 décrit ci-après.

Le corps 201 présente par ailleurs, sensiblement à la moitié de sa hauteur, une attache transversale 210, dirigée vers la cellule de l'hélicoptère, par laquelle le corps 201 est monté pivotant autour d'un tourillon 211 longitudinal et sensiblement horizontal, porté par l'axe transversal 212 monté pivotant dans les paliers 213 et 214 de la structure de l'ailette. Comme sur l'atterrisseur des figures 7 à 9, on retrouve, à la partie inférieure du corps 201, la partie inférieure du cylindre 217 de l'amortisseur, qui est retenu dans le corps 201 par les l'éléments frangibles du dispositif d'absorption d'énergie par déformation plastique, et qui reçoit lui-même la tige 218, et une chape 215, entourant le corps 201 et sur laquelle s'articule, autour d'un axe transversal, l'extrémité d'une branche de compas 216, ainsi que l'élément frangible 219 bloquant la rotation de la chape 215 autour du corps 201. L'autre extrémité de la branche de compas 216 est pivotée sur la partie antérieure d'un balancier 220, sur la partie centrale duquel s'articule l'extrémité inférieure de la tige 218, et dont la partie postérieure est conformée en chape dans laquelle est montée en rotation une roue équipée d'un pneumatique 221.

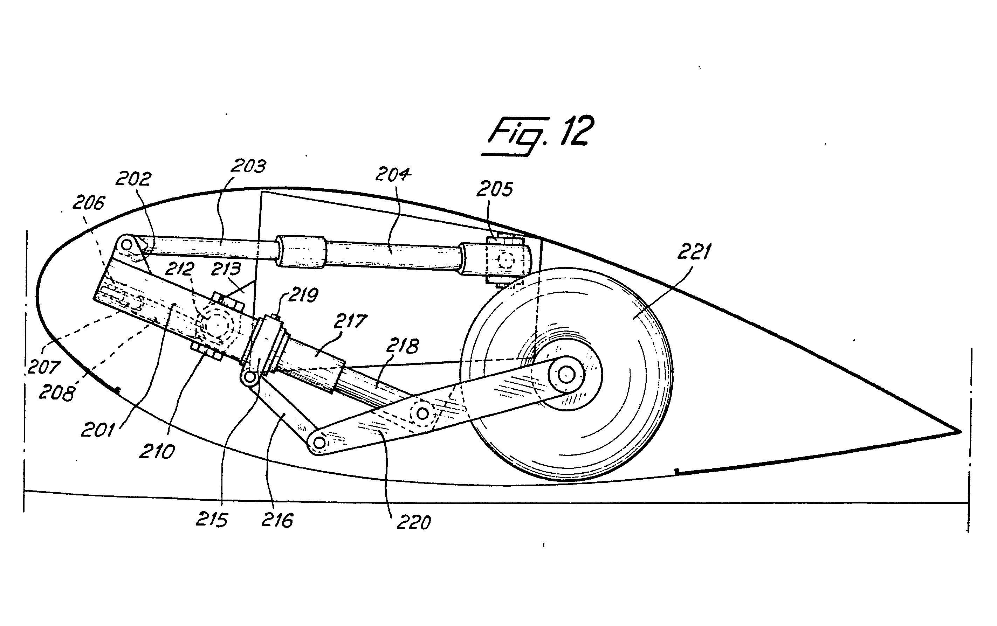

Pour passer de la position train rentré, représentée sur la figure 12, et dans laquelle l'atterrisseur est logé dans l'ailette et verrouillé en position grâce au vérin hydraulique 203, 304, lui-même verrouillé en position tige sortie, à la position train sorti, il suffit de commander la rentrée de la tige 203 dans le cylindre 204 de vérin jusqu'au verrouillage en position tige rentrée, ce qui provoque la rotation du corps 201 avec l'axe 212 transversal dont il est solidaire, puis le verrouillage de la jambe en position train sorti, dont le contreventement longitudinal est assuré par le vérin 203, 204 et le contreventement latéral par la contre-fiche 207, 208, le relevage s'effectuant par la rotation en sens inverse, commandé par la sortie de la tige 203 hors du cylindre 204 du vérin.

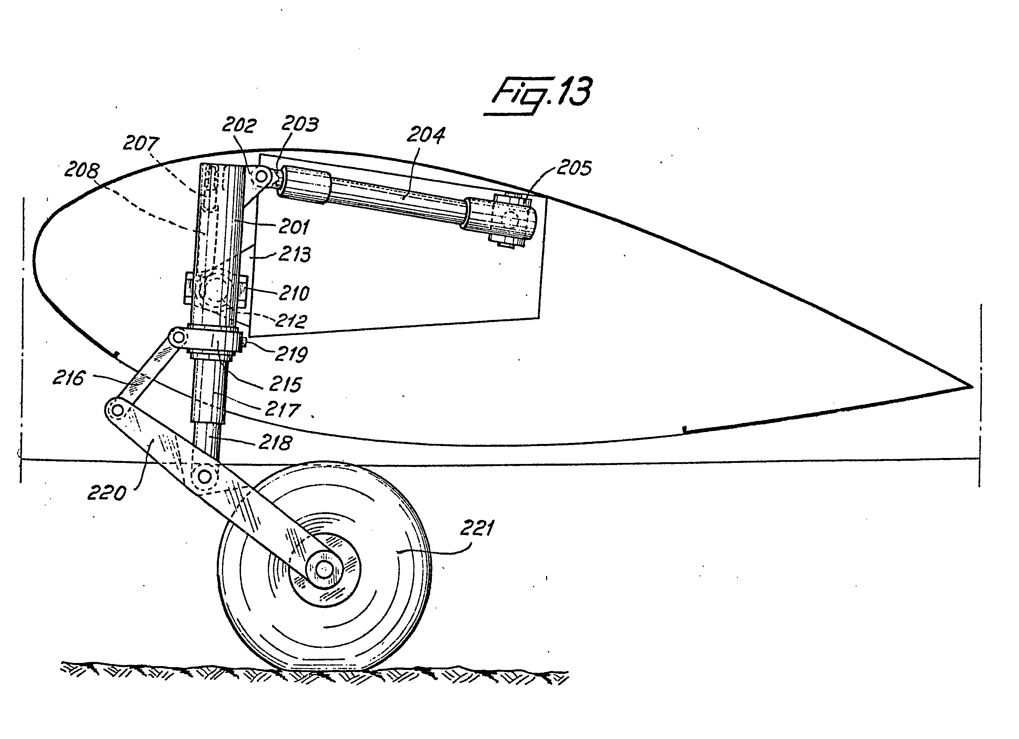

Après un atterrissage effectué dans des conditions normales, la tige 218 de l'amortisseur prend dans le cylindre 217 une position d'équilibre sous charge statique, représentée sur la figure 13.

Par contre, en cas de choc vertical résultant d'un atterrissage avec une vitesse verticale trop importante, entraînant le blocage de la tige 218 dans le cylindre 217 de l'atterrisseur, l'effort transmis par le cylindre 217 au corps 201, supérieur aux efforts de fonctionnement de l'atterrisseur dans des conditions normales, est supérieur à la charge prédéterminée de rupture des éléments frangibles du dispositif d'absorption d'énergie par déformation plastique dont est équipé l'amortisseur, de sorte que le fonctionnement de ce dispositif se déclenche, et que l'effort transmis à la cellule ne provoque pas l'endommagement de cette dernière, puisqu'une grande partie de l'énergie d'impact est absorbée et dissipée par le fonctionnement du dispositif d'absorption d'énergie, tout au long de la course verticale du cylindre 217 dans le corps 201.

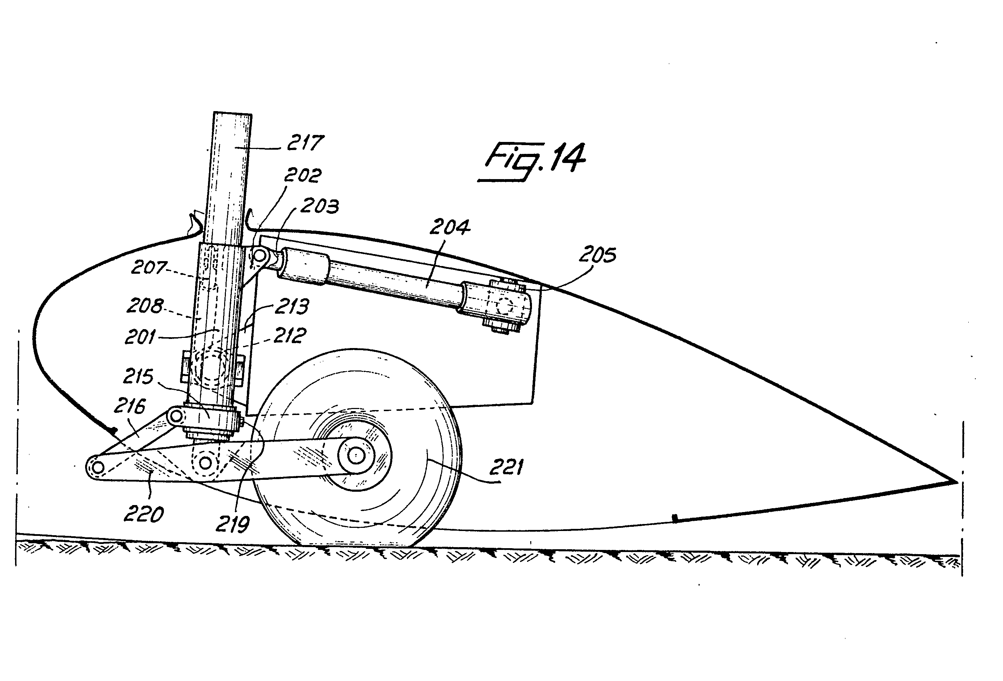

Après l'impact vertical, l'atterrisseur se trouve dans la position représentée sur la figure 14. Le cylindre 217 dépasse de la partie supérieure du corps 201, et le balancier 220 est en appui contre la partie inférieure de ce dernier ou contre la chape 215, le pneumatique équipant la roue 221 ayant éventuellement éclaté, après avoir absorbé élastiquement une certaine quantité d'énergie à l'impact par compression de sa chambre d'air, et après avoir dissipé une certaine autre quantité d'énergie à l'impact par la déformation du pneumatique. Il faut noter que ces quantités d'énergie sont respectivement absorbée élastiquement et dissipée dans les cas également d'atterrissage dans des conditions normales, pour lesquels il peut s'ajouter une dissipation supplémentaire d'énergie par ripage des pneumatiques sur le sol, et que ces quantités, bien que très inférieures à celles absorbées élastiquement et dissipées par l'amortisseur, ne sont cependant pas négligeables.

Dans le cas d'un impact vers l'avant, à vitesse trop élevée, et au niveau de la roue 221, la forme et l'inclinaison du balancier 220 font que des efforts provenant de l'obstacle contre lequel butte la roue 221 sont introduits sur la tige d'amortisseur 218, qui peut, dans les mêmes conditions que pour un choc vertical à trop grande vitesse, se bloquer dans le cylindre 217, même en cas d'éclatement du pneumatique, et provoquer le déclenchement au niveau d'effort désiré du dispositif d'absorption d'énergie par déformation plastique, logé entre le cylindre 217 et le corps 201.

Dans le cas où l'impact vers l'avant à vitesse trop élevée s'effectue au niveau de la partie antérieure du balancier 220 ou de la partie inférieure du corps 201, les efforts provenant du sol tendent à faire pivoter la jambe d'atterrisseur vers l'arrière, autour de l'axe de relevage 212, en sollicitant en traction le vérin de manoeuvre et de contre-fiche 203, 204 qui assure le contreventement longitudinal. Si les efforts de traction indroduits dans la tige 203 du vérin, verrouillée en position tige rentrée, sont supérieurs au seuil de déclenchement du dispositif d'absorption d'énergie par déformation plastique dont le vérin est équipé, il se produit effectivement une rotation de la jambe d'atterrisseur vers l'arrière et une sortie de la tige 203 du cylindre 204 avec dissipation d'une certaine quantité d'énergie d'impact par déformation plastique.

Dans certaines configurations d'atterrissage avec des vitesses verticale et horizontale trop élevées, les dispositifs d'absorption d'énergie par déformation plastique équipant l'amortisseur et le vérin peuvent être déclenchés selon l'importance des composantes verticale et longitudinale des efforts provenant du sol par rapport aux seuils de déclenchement de ces dispositifs.

Dans le cas où l'attitude de l'hélicoptère sur sa trajectoire est telle que l'atterrisseur se présente de travers, avec un angle de lacet, et que l'effort provenant du sol présente une composante transversale s'appliquant sur la roue 221, le balancier 220 et la tige 218 sont soumis à un moment de torsion autour de l'axe de l'amortisseur, et ce moment de torsion est transmis par la branche de compas 216 à la chape 215. Si l'effort qui sollicite la chape 215 en rotation autour du corps 201 est supérieur à la valeur prédéterminée de la charge de rupture en cisaillement de l'élément frangible 219, ce dernier se rompt et désolidarise en rotation la chape 215 du corps 201. La chape 215 est alors pivotée avec la branche de compas 216 autour du corps 201, et permet en conséquence l'orientation de l'ensemble constitué par la roue 221, le balancier 220 et la tige 218 dans la direction de l'effort venant du sol. On se trouve ensuite ramené dans des conditions envisagées précédemment d'impact vertical ou d'impact vers l'avant, étant bien etendu que le seuil de rupture de l'élément frangible 219 est inférieur au seuil de rupture des éléments frangibles des dispositifs d'absorption d'énergie par déformation plastique équipant d'une part l'amortisseur, d'autre part le vérin.

Dans le cas d'un impact latéral, la roue 221, le balancier 220 et la tige 218 peuvent s'orienter dans la direction de l'effort grâce à la rupture de l'élément frangible 219, comme précédemment expliqué. Cependant, si l'effort latéral est supérieur au seuil de déclenchement du dispositif d'absorption d'énergie par déformation plastique logé dans la contre-fiche entre la tige 207 et le cylindre 208, cet effort entraîne une rotation de la jambe d'atterrisseur autour du tourillon 211 soit vers l'intérieur par rapport à l'hélicoptère, soit vers l'extérieur, selon la direction de l'effort latéral, en sollicitant la contre-fiche soit en traction, soit en compression. La contre-fiche va limiter l'effort transmis à la structure de l'hélicoptère en absorbant de l'énergie grâce à son allongement ou à son raccourcissement, accompagnant la rotation du corps 201 autour du tourillon 211.

La structure de cet atterrisseur permet donc de limiter, à une valeur prédéterminée, l'effort produit par un choc ou un impact contre un obstacle dans les éléments de liaison que sont la contre-fiche et le vérin, assurant en utilisation normale le positionnement rigide des jambes d'atterrisseur dans une position d'utilisation, grâce à leur déformation en traction et/ou en compression. Cet atterrisseur a pour principal avantage de découpler la fonction d'atterrissage normal de la fonction de protection contre les impacts à vitesse élevée, dans toutes les directions possibles, cette fonction de protection étant assurée par différents composants, suivant la direction de l'effort d'impact. En effet les composantes verticales sont absorbées par l'amortisseur et éventuellement son dispositif d'absorption d'énergie par déformation plastique, tandisque les composantes longitudinales sont absorbées par le vérin et que les composantes transversales sont absorbées par la contre-fiche.

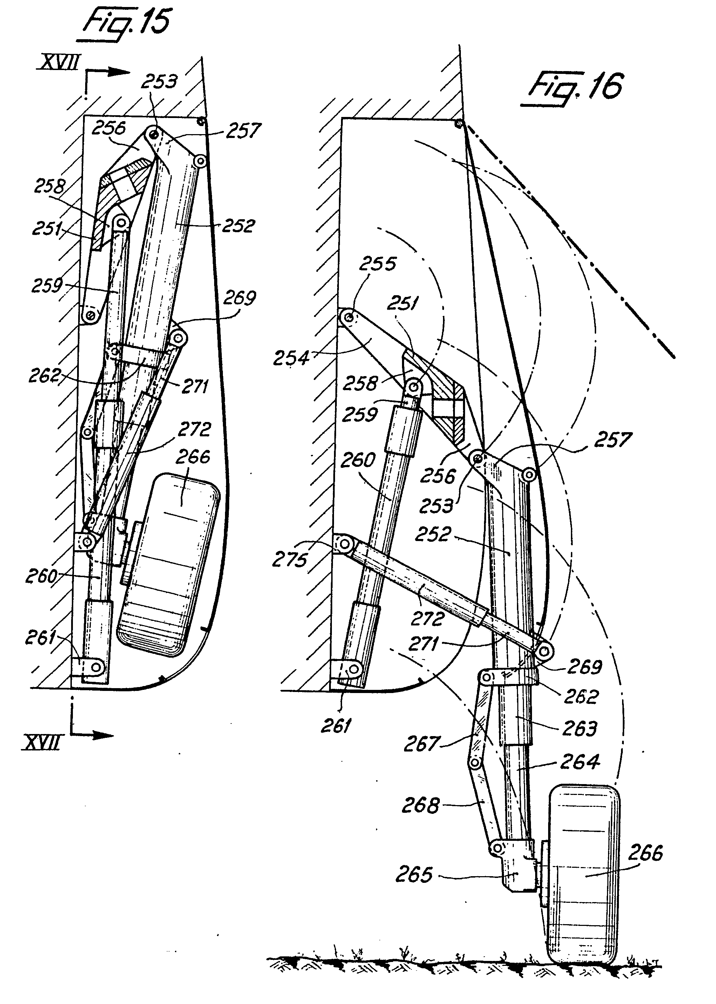

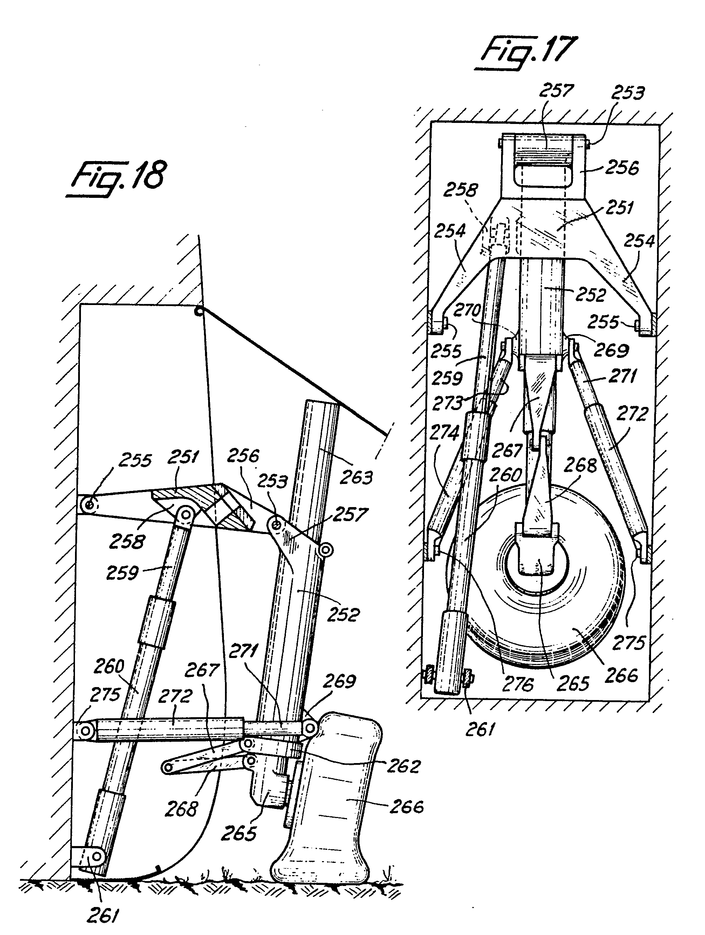

L'atterrisseur latéral représenté sur les figures 15 à 18, d'un train principal d'hélicoptère à relevage latéral dans le fuselage, comprend une jambe constitué d'un caisson 251 et d'un fût 252 montés pivotant l'un sur l'autre autour d'un axe longitudinal 253. Le caisson 251 a une forme générale triangulaire et présente deux pattes 254 par chacune desquelles le caisson 251 est monté pivotant autour d'une portion d'axe longitudinal 255, solidaire de la structure de l'hélicoptère, ainsi qu'une chape 256 recevant l'attache 257 prévue à l'extrémité supérieure du fût 252 pour le pivotement de ce dernier sur le caisson 251 autour de l'axe 253. Sur sa face inférieure, en position train sorti, le caisson 251 présente également une attache 258, sur laquelle est articulée l'extrémité de la tige 259 d'un vérin tel que celui décrit précédemment en référence aux figures 1 à 3, dont le cylindre 260 est articulé sur une attache 261 prévue à la partie inférieure du logement du fuselage, dans lequel l'atterrisseur est logé en position train rentré, tandis que les portions d'axes longitudinaux 255 sont fixés sensiblement à mi-hauteur dans ce logement. Le fût 252 de la jambe est constitué par le corps d'un amortisseur tel que celui précédemment décrit en référence aux figures 7 à 9, et l'on retrouve une chape 262, montée sur l'extrémité inférieure du fût 252, un cylindre 263 d'amortisseur dépassant de cette extrémité inférieure et dans lequel est reçue la tige 264 d'amortisseur, dont l'extrémité inférieure 256 porte une fusée tournée vers l'extérieur et sur laquelle est montée une roue 266 équipée d'un pneumatique. L'alignement de la roue 266 par rapport à la jambe d'atterrisseur est assuré par un compas dont la branche supérieure 267 et la branche inférieure 268 sont montées pivotantes l'une sur l'autre et respectivement sur la chape 262 et sur la partie inférieure 265 et la tige 264, autour d'axes longitudinaux. Au voisinage de son extrémité inférieure, le fût 252 présente également une attache antérieure 269 et une attache postérieure 270 sur lesquelles sont respectivement articulées les extrémités de tiges 271 et 273 de contre-fiches telles que celle précédemment décrite en référence à la figure 10, et dont les cylindres 272 et 274 sont respectivement articulés sur des attaches 275 et 276 solidaires de la structure de l'hélicoptère, à une hauteur intermédiaire entre celle de l'attache 261 du vérin et celle des portions d'axes longitudinaux 255 dans le prolongement l'une de l'autre, et respectivement située en avant et en arrière du plan transversal passant par le fût 252.

Dans la position train rentré, représentée sur la figure 15, le caisson 251 et le fût de jambe 252 sont pratiquement disposés l'un contre l'autre, l'axe de pivotement longitudinal 253 étant positionné dans la partie supérieure du logement, au-dessus de l'axe de relevage constitué par les deux portions d'axes longitudinaux 255, et l'atterrisseur est verrouillé dans cette position train rentré par le vérin lui-même verrouillé en position tige sortie.

La descente de l'atterrisseur est assurée en commandant la rentrée de la tige 259 dans le cylindre 260 du vérin, ce qui provoque la rotation du caisson 251 vers le bas autour de l'axe de relevage, et la descente du fût 252, maintenu sensiblement dans une même direction au cours de son déplacement vers le bas, grâce au montage sensiblement en parallélogramme déformable formé par les deux contre-fiches, le caisson 251 et le fût 252 avec la paroi verticale du logement. En fin de descente, l'atterrisseur est verrouillé en position train sorti par le verrouillage du vérin en position tige rentrée, comme cela est représenté sur la figure 6.

Le relevage de l'atterrisseur est obtenu en commandant les opérations opposées de sortie de tige 259 du cylindre 260 du vérin et de rotation en sens inverse, vers le haut, du caisson 251.

Dans le cas d'un impact vertical, avec une vitesse supérieure à la vitesse maximale pour laquelle l'amortisseur peut fonctionner dans des conditions acceptables, la tige 264 de l'amortisseur se bloque pratiquement dans le cylindre 263, et le dispositif d'absorption d'énergie par déformation plastique logé entre le cylindre 263 et le fût 252 se déclenche au niveau d'effort désiré. En bout de course du cylindre 263 se déplaçant en translation verticale dans le fût 252, un supplément d'énergie peut être absorbé par le vérin de manoeuvre 259, 260, du fait de sa position sensiblement parallèle à celle du fût 252 qui lui est donnée par la cinématique du relevage, si le niveau de déclenchement et de fonctionnement du dispositif d'absorption d'énergie par déformation plastique du vérin est supérieur à celui de l'amortisseur, de façon à absorber un maximum d'énergie à l'impact et à retarder au maximum la venue de la structure en contact avec le sol, comme représenté sur la figure 8.

On obient ainsi un fonctionnement en série des dispositifs d'absorption d'énergie équipant respectivement l'amortisseur et le vérin de manoeuvre de l'atterrisseur, dont les effets s'additionnent pour limiter autant que possible l'intensité de l'effort transmis par la jambe d'atterrisseur à la structure de la cellule.

Dans le cas d'un impact latéral, les deux contre-fiches 271-272 et 273-274 peuvent fonctionner simultanément, en traction ou en compression, suivant la direction de l'impact, afin d'absorber une certaine quantité d'énergie et de limiter l'effort latéral transmis à la cellule. Les deux contre-fiches tendent donc à s'opposer à toute rotation transversale du fût 252 de l'atterrisseur autour de l'axe longitudinal de pivotement 253 de ce dernier sur le caisson 251, tant que les composantes axiales sollicitant ces contre-fiches ne sont pas supérieures à la veleur de déclenchement du dispositif d'absorption d'énergie par déformation plastique qui les équipe.

Dans le cas d'un impact longitudinal, dirigé vers l'avant ou vers l'arrière, la limitation des efforts longitudinaux transmis par l'atterrisseur à la cellule est obtenue par la mise en oeuvre des dispositifs d'absorption d'énergie par déformation plastique équipant les contre-fiches dont l'une, située en amont par rapport à la direction d'application des efforts résultant de l'impact, est sollicitée en traction et dont l'autre, située en aval par rapport à la direction de ces efforts, est sollicitée en compression. Le choix des inclinaisons des contre-fiches, qui assurent simultanément le contreventement longitudinal et le contreventement latéral de l'atterrisseur et le chois de leurs points de fixation permettent d'éviter la détériotation du dispositif vertical d'absorption d'énergie.

Le train d'atterrissage qui vient d'être décrit procure les mêmes avantages que celui décrit en référence aux figures 11 à 14, dans la mesure où il assure également le découplage de la fonction atterrissage normal par rapport à la fonction protection contre les impacts à vitesse élevée dans toutes directions possibles, cette dernière fonction étant, dans ce cas également, assurée par différents composants suivant la direction de l'effort d'impact.

L'invention n'est pas limitée aux deux exemples de réalisation de train d'atterrissage qui viennent d'être décrits, mais s'étend au contraire à tous les trains équipés d'au moins un composant, du type contre-fiche, vérin ou amortisseur, selon l'invention.

Il est clair que le train à relevage longitudinal vers l'arrière, représenté sur les figures 11 à 14, peut être aménagé en train de voilure comme en train de fuselage, et qu'il peut être du type à balancier, comme décrit, ou encore du type à coulissement direct, comme cela est le cas du train décrit en référence aux figures 15 à 18, où la roue est directement portée par la partie inférieure de la tige d'amortisseur, montée coulissante axialement dans le cylindre et dans le fût de la jambe d'atterrisseur. Le contreventement latéral de ces trains peut être assuré par une contre-fiche latérale interne et/ou une contre-fiche latérale externe par rapport au plan longitudinal passant par la jambe d'atterrisseur, ces contre-fiches s'articulant sur la jambe soit au-dessus, soit au-dessous de l'axe de relevage.

Si l'axe de relevage transversal coupe la jambe entre l'organe de contact avec le sol et l'articulation de l'organe de manoeuvre, le contreventement longitudinal peut être assuré non seulement par un vérin longitudinal disposé derrière la jambe d'atterrisseur, et verrouillé en position tige rentrée, de façon à être sollicité en traction par les efforts résultant d'un impact vers l'avant, mais également ou alternativement par un vérin longitudinal disposé à l'avant de l'atterrisseur, verrouillé en position tige sortie, et sollicité en compression par l'effort résultant d'un impact vers l'avant.

Par contre, si l'axe de relevage coupe la jambe au-dessus de l'articulation du vérin de manoeuvre sur la jambe, le contreventement longitudinal peut être assuré par un vérin longitudinal disposé à l'arrière de la jambe, et verrouillé en position tige sortie, de façon à être sollicité en compression par un effort résultat d'un impact vers l'avant, et/ou par un vérin longitudinal disposé à l'avant de la jambe et verrouillé en position tige rentrée, pour être sollicité en traction par le même type d'effort.

Si l'on considère l'atterrisseur représenté sur les figures 11 à 14, il est possible d'intervertir les positions de la contre-fiche 207, 208 et du vérin 203, 204 de façon à obtenir un train à relevage transversal, vers l'intérieur, dont le contreventement longitudinal et le contreventement latéral, en position train sorti, sont assurés respectivement par une contre-fiche longitudinale, disposée derrière la jambe, et tendant à s'opposer aux rotations de la jambe autour de l'axe transversal 212, et par un vérin latéral, disposé à l'intérieur de la jambe par rapport à l'aérodyne, verrouillé en position tige rentrée et tendant à s'opposer aux rotations vers l'intérieur autour du tourillon longitudinal 211.

Dans cette configuration d'atterrisseur, le contreventement longitudinal est assuré soit par une contre-fiche longitudinale avant et/ou par une contre-fiche longitudinale arrière, articulées l'une et/ou l'autre sur la jambe au-dessus ou au-dessous de l'axe de relevage. Si l'attache du vérin sur la jambe est située au-dessous de l'axe de relevage longitudinal, le contreventement latéral peut être assuré par un vérin verrouillé en position tige sortie.

Si l'on considère le train de fuselage à relevage latéral décrit en référence aux figures 15 à 18, il est clair que ce train peut être aménagé en train à balancier.

Enfin l'invention concerne également les trains d'atterrissage fixes, obtenues en n'utilisant que comme contre-fiches hydrauliques les vérins équipant les trains d'atterrissage évoqués ci-dessus.

## Revendications

1. Composant remplissant une fonction principale hydraulique et/ou mécanique, du type vérin, amortisseur ou contre-fiche, comprenant un élément tubulaire (1, 51, 115, 151), à l'intérieur duquel est reçu un élément télescopique (2, 102, 154) immobilisé vis-à-vis de l'élément tubulaire dans au moins une position d'utilisation par au moins un dispositif de verrouillage (23), caractérisé en ce qu'il comprend également un dispositif d'absorption d'énergie par déformation plastique et/ou de limitation d'effort, comportant un ensemble d'éléments de roulement (19, 120, 160), retenu par une cage (18, 121, 161), et interposé avec serrage entre un organe interne (2) et un organe externe (1) montés l'un dans l'autre, et dont au moins l'organe externe (1) est un organe à charge de déformation plastique prédéterminée, lesdits organes (1, 2) etant susceptibles de coulisser l'un dans l'autre après rupture d'un élément frangible (21-22, 118, 166) à charge de rupture prédéterminée compris dans le dispositif de verrouillage (23), de sorte que les éléments de roulement (19) provoquent, de façon en soi connue, une dissipation d'énergie par déformation plastique d'au moins l'organe externe (1, 119, 162), qui est solidaire de l'élément tubulaire (1, 51, 115, 151), l'élément télescopique (2, 102, 154) constituant l'organe interne qui entraîne la cage de retenue (18, 121, 161).

2. Composant selon la revendication 1, caractérisé en ce que l'élément tubulaire (1, 51), constitue lui-même l'organe externe déformable plastiquement.

3. Composant selon la revendication 1, caractérisé en ce que l'organe déformable plastiquement est constitué par un fourreau (119, 162), doublant l'élément tubulaire (115, 151), à l'intérieur de ce dernier, sur au moins une partie de sa longueur, avec un jeu radial suffisant pour admettre la déformation plastique provoquée par les éléments de roulement (120, 160), et amovible pour permettre la remise en état du composant par remplacement du fourreau (119, 162), et d'au moins l'élément frangible (118, 166).

4. Composant selon l'une des revendications 1 à 3, caractérisé en ce que l'élément tubulaire et l'élément télescopique sont respectivement constitués par le corps (151) et la tige (154) d'une contre-fiche, et le dispositif de verrouillage et l'élément frangible sont simultanément constitués par au moins un boulon (166) à tige partiellement filetée, vissé dans une extrémité du corps (151) traversée par la tige (154) et tel que l'extrémité de la tige du boulon (166) pénètre dans la tige (154) afin d'immobiliser cette dernière par rapport au corps (151) dans une position initiale dans laquelle une partie de la tige (154) est reçue dans le corps (151), la cage (161) étant solidaire de l'extrémité de la tige (154) interne au corps (151) et les éléments de roulement (160) étant en appui radial interne et externe respectivement contre la tige (154) et dans une empreinte de l'organe déformable plastiquement, constitué soit par le corps (151), soit par le fourreau (162) qui est retenu contre l'extrémité du corps (51) traversée par la tige (154) au moyen de la tige du ou des boulons (166).

5. Composant selon l'une des revendications 1 à 3, caractérisé en ce que l'élément tubulaire et l'élément télescopique sont respectivement constitués par un cylindre (1, 51) et une tige (2) d'un vérin hydraulique, une extrémité de la tige (2) interne au cylindre (1, 51) portant un piston (12) de guidage de la tige (2) dans le cylindre (1, 51), le dispositif de verrouillage comprenant, de façon en soi connue, des griffes élastiques (23) dont les têtes sont destinées à être bloquées contre un redan du cylindre (1, 51) par au moins un piston de verrouillage (34, 84) afin d'immobiliser la tige (2) dans le cylindre (1, 51), et l'élément frangible étant constitué d'un talon radial, solidaire des pieds des griffes (23), et présentant une couronne extérieure (22) séparée par une section de rupture d'une couronne intérieure (21) entraînée par la tige (2) avec la cage (18) solidaire de l'extrémité de la tige (2) interne au cylindre (1, 51).

6. Composant selon la revendication 5, caractérisé par le fait que les éléments de roulement (19) sont initialement retenus radialement vers l'intérieur dans une gorge (30) d'un anneau (28) coulissant entre la cage (18) et la tige (2) et sollicité élastiquement vers la couronne extérieure (22) de l'élément frangible, la gorge (30) se raccordant par une rampe inclinée à une portion cylindrique (31) de l'anneau (28) qui provoque, en cas de rupture de l'élément frangible, la sortie des éléments de roulement (19) de la gorge (30) et leur déplacement sur la rampe inclinée puis sur la portion cylindrique (31) de l'anneau (28) en raison du déplacement axial de la cage (18) et de la tige (2) par rapport à l'anneau (28), qui est élastiquement en butée contre la couronne extérieure (22) jusqu'à ce qu'il soit entraîné axialement avec la tige (2) par la couronne intérieure (21), de sorte que les éléments de roulement (19) sont déplacés radialement vers l'extérieur et en saillie par rapport à la cage (18) afin de provoquer les déformations plastiques de l'organe déformable.

7. Composant selon la revendication 6 et dont l'organe externe est le cylindre (1, 51) du vérin, caractérisé en ce que la cage (18), les éléments de roulement (19) et l'anneau (28) sont initialement entourés par une extrémité du cylindre (1, 51) qui présente un chambrage (41) s'étendant axialement sur une distance suffisante afin d'autoriser la venue des éléments de roulement (19) en saillie par rapport à la cage (18), après la rupture de l'élément frangible (21, 22) et un déplacement axial de la tige (2) dans le cylindre (1, 51).

8. Composant selon l'une des revendications 1 à 3, caractérisé en ce que l'élément tubulaire et l'élément télescopique sont respectivement constitués par un corps (115) d'amortisseur et par un cylindre (102) d'amortisseur, au moins partiellement logé dans le corps (115), et dans lequel est montée coulissante avec étanchéité une tige (101) de l'amortisseur qui comprend de plus un dispositif élastique d'absorption d'énergie (110) rappelant la tige (101) en position initiale dans le cylindre (102), et un dispositif de dissipation d'énergie par laminage (113) d'huile hydraulique en cas de déplacement relatif de la tige (101) et du cylindre (102), le dispositif de verrouillage et l'élément frangible étant simultanément constitués par au moins un boulon (118) à tige partiellement filetée traversant un alésage radial du corps (115) et vissée dans le cylindre (102).

9. Composant selon la revendication 8, caractérisé en ce que les éléments de roulement (120) sont en appui radial vers l'intérieur dans une gorge du cylindre (102) et sont amenés par la cage (121) à coopérer avec l'organe déformable constitué suit par le corps (115), soit par un fourreau (119) retenu au moins le ou les boulons (118) contre le corps (115).

10. Train d'atterrissage pour aérodyne, caractérisé en ce qu'il comprend au moins un composant selon l'une des revendications 1 à 9 précédentes.

11. Train d'atterrissage selon la revendication 10, du type comprenant, pour chaque atterrisseur, un fût (201, 252) équipé d'un amortisseur ayant une tige (218, 264) dont l'extrémité inférieure porte au moins un organe de contact avec le sol (221, 266), le fût étant maintenu en position d'atterrissage et de décollage par un dispositif de contreventement latéral et un dispositif de contreventement longitudinal qui sont articulés chacun sur le fût et sur la structure de l'aérodyne, caractérisé en ce que l'amortisseur est un composant selon l'une des revendications 8 et 9 précédentes, dont le corps constitue directement le fût (201, 252), et dont l'élément frangible se casse lorsque le cylindre (217, 263) d'amortisseur transmet au fût (201, 262) un effort supérieur à un seuil de blocage de la tige (218, 264) dans le cylindre (217, 263) afin de déclencher le fonctionnement du dispositif d'absorption d'énergie de l'amortisseur.

12. Train d'atterrissage selon la revendication 11, caractérisé en ce que le dispositif de contreventement latéral et/ou le dispositif de contreventement longitudinal comprenant au moins une contre-fiche (207-208, 271-272, 273-274) selon la revendication 4 précédente, dont le dispositif d'absorption d'énergie par déformation plastique se déclenche lorsque l'effort supporté par la contre-fiche selon la direction du contreventement qu'elle assure est supérieur au seuil de rupture de son élément frangible.

13. Train d'atterrissage selon l'une des revendications 11 et 12, caractérisé en ce que le dispositif de contreventement latéral et/ou le dispositif de contreventement longitudinal comprennent au moins un vérin de contreventement (203-204), constitué par un composant selon l'une des revendications 5 à 7 précédentes, dont le dispositif d'absorption d'énergie par déformation plastique se déclenche lorsque l'effort supporté par le vérin selon la direction du contreventement qu'il assure est supérieur au seuil de rupture de son élément frangible.

14. Train d'atterrissage selon la revendication 13, du type dit relevable, caractérisé en ce que le vérin de contreventement (203-204) constitue simultanément un vérin de manoeuvre, commandant la rotation du fût (201) autour d'un axe de relevage (212), entre une position train rentré et une position train sorti, ainsi, éventuellement, que le verrouillage du fût (201) dans ces deux positions.

15. Train d'atterrissage selon la revendication 14, du type dit à balancier, dont la tige d'amortisseur (218) est articulée sur un balancier (220) portant l'organe de contact avec le sol (221) et monté pivotant sur une branche de compas (216), reliant le balancier (220) à une chape (215) qui entoure le fût (201), et sur laquelle la branche de compas (216) est montée pivotante, caractérisé en ce que la chape (215) et le fût (201) sont solidarisés en rotation par au moins un second élément frangible (219), à charge de rupture prédéterminée inférieure à la charge de rupture de l'élément frangible du dispositif de contreventement latéral, de sorte que si la composante transversale d'un effort sollicitant l'organe de contact avec le sol (221) et le balancier (220) dépasse une valeur maximale admissible, le second élément frangible (219) se casse et désolidarise en rotation le fût (201) et la chape (215), en permettant l'orientation de l'ensemble constitué par l'organe de contact avec le sol (221), le balancier (220) et la tige d'amortisseur (218) dans la direction de cette composante, qui est ensuite absorbée par les dispositifs d'absorption d'énergie par déformation plastique du dispositif de contreventement latéral et/ou de l'amortisseur, si la valeur de cette composante est supérieure au seuil de l'élément frangible correspondant.

16. Train d'atterrissage selon l'une des revendications 14 et 15, du type dit à relevage longitudinal, dont le fût (201) est solidaire d'un axe de relevage transversal (212) monté pivotant sur la structure de l'aérodyne, caractérisé en ce que le vérin (203-204) est disposé selon une direction sensiblement longitudinale, le fût (201) est monté pivotant sur l'axe de relevage (212) autour d'un tourrilon longitudinal (211), et le contreventement latéral est assuré par la contre-fiche (207-208) disposée dans un plan transversal, de sorte qu'en dehors des manoeuvres du train, le fût (201) puisse pivoter, à partir de la position train sorti, respectivement autour de l'axe de relevage transversal (212) et du tourrilon longitudinal (211) après les déclenchements respectifs des dispositifs d'absorption d'énergie par déformation plastique du vérin (203-204) et de la contre-fiche (207-208).

17. Train d'atterrissage selon l'une des revendications 14 et 15, du type dit à relevage transversal, dont le fût (201) est solidaire d'un axe de relevage longitudinal (211) monté pivotant sur la structure de l'aérodyne, caractérisé en ce que le vérin est disposé dans un plan sensiblement transversal, le fût (201) est monté pivotant sur l'axe de relevage (211) autour d'un tourillon transversal (212), et le contreventement longitudinal est assuré par une contre-fiche disposée selon une direction sensiblement longitudinale, de sorte qu'en dehors des manoeuvres du train, le fût (201) puisse pivoter, à partir de la position train sorti, respectivement autour de l'axe de relevage longitudinal (211) et du tourillon transversal (212) après les déclenchements respectifs des dispositifs d'absorption d'énergie par déformation plastique du vérin et de la contre-fiche.

18. Train d'atterrissage selon la revendication 12, du type se relevant transversalement dans le fuselage, comprenant un vérin (259, 260) commandant la manoeuvre du fût (252) autour d'un axe de relevage longitudinal (255) solidaire de la structure de l'aérodyne, caractérisé en ce que l'extrémité supérieure du fût (252) est montée pivotante sur un caisson (251) de forme générale triangulaire, pivotant autour de l'axe de relevage (255), et sur lequel est articulée une extrémité du vérin (259-260), de sorte que les dispositifs d'absorption d'énergie par déformation plastique de l'amortisseur et du vérin puissent être successivement utilisés pour l'absorption d'une composante verticale importante d'un effort sollicitant l'organe de contact avec le sol (266), le contreventement latéral et le contreventement longitudinal étant assurés par une contre-fiche inclinée vers l'avant (273-274) et une contre-fiche inclinée vers l'arrière (271-272) de l'aérodyne par rapport au fût (252).

## Patentansprüche

1. Element mit hydraulischen und/oder mechanischen Hauptfunktionen, in der Art eines Hubzylinders, Stossdämpfers oder einer Strebe, mit einem Rohrelement (1, 51, 115, 151) in dessen Innerem ein Teleskopelement (2, 102, 154) aufgenommen wird, welches gegenüber dem Rohrelement in mindestens einer Gebrauchslage durch mindestens eine Verriegelungseinrichtung (23) festgehalten wird, dadurch gekennzeichnet, dass ferner eine Energieaufnahmevorrichtung durch plastische Verformung und/oder eine Kraftbegrenzungsvorrichtung vorhanden ist, die eine Anordnung von Rollelementen (19, 120, 160) aufweist, welche in einem Gehäuse (18, 121, 161) gehalten werden und die durch Aufspannen zwischen einem Innenelement (2) und einem Aussenelement angeordnet ist, wovon das eine im anderen untergebracht ist, wobei mindestens das Aussenelement (1) ein Element mit vorgegebener plastischer Verformungsbeanspruchung ist und die Elemente (1, 2) nach Bruch eines in der Verriegelungseinrichtung angeordneten, zerstörbaren Elements (21-22, 118, 166) mit vorgegebener Bruchbelastung ineinander gleiten können, so dass die Rollelemente (19) in an sich bekannter Weise eine Energiezerstreuung durch plastische Verformung mindestens des Aussenelements (1, 119, 162) veranlassen, welches mit dem Rohrelement (1, 51, 115, 151) fest verbunden ist, und das Teleskopelement (2, 102, 154) das Innenelement bildet, welches das zur Halterung dienende Gehäuse (18, 121, 161) mitnimmt.

2. Element nach Anspruch 1, dadurch gekennzeichnet, dass das Rohrelement (1, 51) selbst das plastisch verformbare Aussenelement darstellt.

3. Element nach Anspruch 1, dadurch gekennzeichnet, dass das plastisch verformbare Element durch eine Hülse (119, 162) gebildet wird, die ein Doppel des Rohrelements (115, 151) im Inneren desselben über zumindest einen Teil dessen Länge bildet, wobei ein ausreichendes radiales Spiel vorhanden ist, um die durch die Rollelemente (120, 160) veranlasste plastische Verformung zuzulassen, und die Hülse abnehmbar ist, um eine Rückstellung des Betriebszustandes des Elements durch Ersatz der Hülse (119, 162) und zumindest des zerstörbaren Elements (118, 166) zu gestatten.

4. Element nach einem der Ansprüche 1 bis 3, dadurch gekennzeichnet, dass das Rohrelement und das Teleskopelement jeweils durch ein Gehäuse (151) und einen Schaft (154) einer Strebe gebildet werden und die Verriegelungseinrichtung und das zerstörbare Element gleichzeitig durch mindestens einen Bolzen (166) mit teilweise mit Gewinde versehenem Schraubenschaft gebildet werden, wobei die Schraube in ein Ende des vom Schaft (154) durchdrungenen Gehäuses (151) derart eingeschraubt ist, dass das Ende des Schraubenschaftes (166) in den Schaft (154) hineinragt, um diesen gegenüber dem Gehäuse (151) in einer Ausgangsstellung festzulegen, in welcher ein Teil des Schaftes (154) im Gehäuse (151) aufgenommen wird, und dabei das Gehäuse (161) mit dem Ende des Schaftes (154) im Inneren des Gehäuses (151) fest verbunden ist und die Rollelemente (160) sich radial innen und aussen jeweils gegen den Schaft (154) und gegen einen Eindrucksbereich im plastisch verformbaren Element abstützen, welches durch das Gehäuse (151) oder durch eine Hülse (162) gebildet wird, die gegen das Ende des vom Schaft (154) durchdrungenen Gehäuses (151) mittels des Bolzenschaftes eines oder mehrerer Bolzen (166) gehalten wird.

5. Element nach einem der Ansprüche 1 bis 3, dadurch gekennzeichnet, dass das Rohrelement und das Teleskopelement jeweils durch einen Zylinder (1, 51) und einen Schaft (2) eines hydraulischen Hubzylinders gebildet werden, dass ein Ende des Schaftes (2) im Inneren des Zylinders (1, 51) einen Kolben (12) zur Führung des Schaftes (2) im Zylinder (1, 51) aufweist, dass die Verriegelungseinrichtung in an sich bekannter Weise elastische Klauen (23) aufweist, deren Köpfe dazu bestimmt sind, durch mindestens einen Verriegelungskolben (34, 84) gegen einen Absatz des Zylinders (1, 51) festgelegt zu werden, um den Schaft (2) im Zylinder (1, 51) festzuhalten, sowie ferner ein zerstörbares Element, welches durch einen radialen Absatz gebildet wird, der fest mit den Füssen der Klauen (23) verbunden ist und der einen Aussenkranz (22) enthält, welcher durch eine Bruchstelle von einem vom Schaft (2) mitgenommenen Innenkranz (21) getrennt ist, wobei das Gehäuse (18) mit dem Ende des Schaftes (2) im Inneren des Zylinders (1, 51) fest verbunden ist.

6. Element nach Anspruch 5, dadurch gekennzeichnet, dass die Rollelemente (19) anfangs in einer Auskehlung (30) eines Ringes (28) radial nach innen gehalten werden, welcher zwischen dem Gehäuse (18) und dem Schaft (2) verschiebbar und elastisch gegen den Aussenkranz (22) des zerstörbaren Elements gedrückt wird, die Auskehlung (30) sich über eine Abschrägung an einen Zylinderabschnitt (31) des Ringes (28) anschliesst, was im Falle des Bruchs des zerstörbaren Elements das Austreten der Rollelemente (19) aus der Auskehlung (30) und ihre Verschiebung auf der Abschrägung und dann auf dem Zylinderabschnitt (31) des Ringes (28) als Folge der Axialbewegung des Gehäuses (18) und des Schaftes (2) gegenüber dem Ring (28) hervorruft, der elastisch gegen den Aussenkranz (22) anliegt, bis er durch den Innenkranz (21) axial mit dem Schaft (2) mitgenommen wird, so dass die Rollelemente (19) radial nach aussen und gegenüber dem Gehäuse (18) vorstehend verschoben werden, um die plastische Verformung des verformbaren Elements zu veranlassen.

7. Element nach Anspruch 6, dessen Aussenelement der Hubzylinder (1, 51) ist, dadurch gekennzeichnet, dass das Gehäuse (18), die Rollelemente (19) und der Ring (28) anfangs durch ein Ende des Zylinders (1, 51) umgeben sind, das eine Kammer (41) bildet, die sich axial um einen ausreichenden Betrag erstreckt, um das vorsprungartige Heraustreten der Rollelemente (19) gegenüber dem Gehäuse (18) nach Bruch des zerstörbaren Elements (21, 22) und eine axiale Verschiebung des Schaftes (2) im Zylinder (1, 51) zu gestatten.

8. Element nach einem der Ansprüche 1 bis 3, dadurch gekennzeichnet, dass das Rohrelement und das Teleskopelement jeweils durch ein Stossdämpfergehäuse (115) und einen Stossdämpferzylinder (102) gebildet werden, welcher mindestens teilweise im Stossdämpfergehäuse (115) angeordnet ist, und in welchem abgedichtet ein Stossdämpferschaft (101) verschiebbar ist, welcher ferner eine Energieaufnahmevorrichtung (110) umfasst, die den Stossdämpferschaft (101) in Ausgangsstellung im Stossdämpferzylinder (102) rückstellt, sowie eine Energiezerstreuungsvorrichtung durch Drosselung (113) von Hydrauliköl bei einer Relativbewegung des Stossdämpferschaftes (101) und Stossdämpferzylinders (102), wobei die Verriegelungseinrichtung und das zerstörbare Element gleichzeitig durch mindestens eine Schraube (118) mit teilweise mit Gewinde versehenem Schraubenschaft gebildet werden, welche durch eine radiale Bohrung des Stossdämpfergehäuses (115) tritt und im Stossdämpferzylinder (102) eingeschraubt ist.

9. Element nach Anspruch 8, dadurch gekennzeichnet, dass sich die Rollelemente (120) radial nach innen zu in einer Auskehlung des Stossdämpferzylinders (102) abstützen und durch das Gehäuse (121) dazu veranlasst werden, mit dem verformbaren Element zusammenzuarbeiten, welches durch den Stossdämpferkörper (115) oder eine Hülse (119) gebildet wird, die durch zumindest eine oder durch mehrere Schrauben (118) gegen das Stossdämpfergehäuse (115) gehalten wird.

10. Fahrgestellanordnung für ein Luftfahrzeug, dadurch gekennzeichnet, dass sie mindestens ein Element nach einem der Ansprüche 1 bis 9 aufweist.

11. Fahrgestellanordnung nach Anspruch 10, einer Bauart, welche für jedes Fahrgestell ein Gehäuse (201, 252) aufweist, welches mit einem Stossdämpfer mit einem Schaft (218, 264) ausgestattet ist, dessen unteres Ende mindestens ein Kontaktorgan (221, 266) für Bodenkontakt aufweist, wobei das Gehäuse in der Lande- und Abflugstellung durch eine seitliche Verbundanordnung und durch eine längsseitige Verbundanordnung gehalten werden, die jeweils mit dem Gehäuse und dem Flugzeugkörper gelenkig verbunden sind, dadurch gekennzeichnet, dass der Stossdämpfer ein Element gemäss einem der Ansprüche 8 und 9 ist, dessen Stossdämpfergehäuse unmittelbar durch das Gehäuse (201, 252) gebildet wird und dessen zerstörbares Element zu Bruch geht, wenn der Stossdämpferzylinder (217, 263) auf das Gehäuse (201, 262) eine Kraft überträgt, die grösser ist als eine Blockierungsschwelle des Schaftes (218, 264) im Zylinder (217, 263), um den Betrieb der Energieaufnahmevorrichtung des Stossdämpfers auszulösen.

12. Fahrgestellanordnung nach Anspruch 11, dadurch gekennzeichnet, dass die seitliche Verbundanordnung und/oder die längsseitige Verbundanordnung mindestens eine Strebe (207-208, 271-272, 273-274) nach Anspruch 4 aufweisen, deren Energieaufnahmevorrichtung mittels plastischer Verformung ausgelöst wird, wenn die von der Strebe entsprechend der von ihr gewährleisteten Verbundrichtung aufgenommene Kraft grösser ist als die Bruchschwelle ihres zerstörbaren Elements.

13. Fahrgestellanordnung nach einem der Ansprüche 11 und 12, dadurch gekennzeichnet, dass die seitliche Verbundanordnung und/oder die längsseitige Verbundanordnung mindestens einen Verbundzylinder (203-204) aufweisen, welcher durch ein Element gemäss einem der Ansprüche 5 bis 7 gebildet wird, dessen Energieaufnahmevorrichtung durch plastische Verformung ausgelöst wird, wenn die vom Verbundzylinder entsprechend der von ihm gewährleisteten Verbundrichtung aufgenommene Kraft grösser ist als die Bruchschwelle seines zerstörbaren Elements.

14. Fahrgestellanordnung nach Anspruch 13 einer einziehbaren Bauart, dadurch gekennzeichnet, dass der Verbundzylinder (203-204) gleichzeitig einen Betätigungszylinder darstellt, welcher die Drehung des Gehäuses (201) um die Einfahrachse (212) zwischen einer eingezogenen und einer ausgefahrenen Fahrwerkstellung steuert, sowie, gegebenenfalls, die Verriegelung des Gehäuses (201) in diesen beiden Stellungen.

15. Fahrgestellanordnung nach Anspruch 14 gemäss einer Schwinghebelbauart, wobei der Schaft (218) des Stossdämpfers gelenkig mit einem Schwinghebel (220) verbunden ist, der das Kontaktorgan (221) für Bodenkontakt trägt und der schwenkbar auf einem Zirkelarm (216) befestigt ist, welcher den Schwinghebel (220) mit einer das Gehäuse (201) umgebenden Hülse (215) verbindet,

und auf welcher der Zirkelarm (216) schwenkbar befestigt ist, dadurch gekennzeichnet, dass die Hülse (215) und das Gehäuse (201) zur Drehung durch mindestens ein zweites zerstörbares Element (219) miteinander verbunden sind, welches eine vorgegebene Bruchlast aufweist, die geringer ist als die Bruchlast des zerstörbaren Elements der seitlichen Verbundanordnung, so dass, wenn die Querkomponente einer auf das Kontaktorgan (221) für Bodenkontakt und den Schwinghebel (220) einwirkenden Kraft einen maximal zulässigen Wert überschreitet, das zweite zerstörbare Element (219) zu Bruch geht und die hinsichtlich einer Drehung bestehende Verbindung zwischen dem Gehäuse (201) und der Hülse (215) löst, um dabei eine Orientierung der aus dem Kontaktorgan (221) für den Boden, den Schwinghebel und den Schaft (218) des Stossdämpfers bestehenden Anordnung in Richtung dieser Querkomponente zu gestatten, die anschliessend durch die Energieaufnahmevorrichtung durch plastische Deformation der seitlichen Verbundanordnung und/oder den Stossdämpfer aufgenommen wird, wenn der Wert dieser Querkomponente grösser ist als die Bruchschwelle des zugeordneten zerstörbaren Elements.

16. Fahrgestellanordnung nach einem der Ansprüche 14 und 15, einer Bauart mit längsseitigem Einziehen, dessen Gehäuse mit einer transversalen Einziehachse (212) fest verbunden ist, die schwenkbar am Aufbau des Luftfahrzeuges befestigt ist, dadurch gekennzeichnet, dass der Hubzylinder (203-204) im wesentlichen in Längsrichtung angeordnet ist, dass das Gehäuse (201) auf der Einziehachse (212) um einen Längszapfen (211) schwenkbar befestigt ist und dass der seitliche Verbund durch eine in einer Querebene liegende Strebe (207-208) gewährleistet wird, so dass ausserhalb der Betätigung der Fahrgestellanordnung das Gehäuse (201), ausgehend von der Stellung der ausgefahrenen Fahrwerksanordnung jeweils um die Achse (212) des transversalen Einziehens und die Achse des längsseitigen Zapfens (211) verschwenkbar sind, nach jeweiliger Auslösung der Energieaufnahmevorrichtung durch plastische Verformung des Hubzylinders (203-204) und der Strebe (207-208).

17. Fahrgestellanordnung nach einem der Ansprüche 14 und 15 einer Bauart für transversales Einziehen, dessen Gehäuse (201) fest mit einer längsseitigen Einziehachse (211) verbunden ist, die schwenkbar am Aufbau des Luftfahrzeuges befestigt ist, dadurch gekennzeichnet, dass der Hubzylinder in einer im wesentlichen transversalen Ebene liegt, dass das Gehäuse (201) auf der Einziehachse (211) schwenkbar um einen transversalen Zapfen (212) befestigt ist, und dass die längsseitige Verbundanordnung durch eine Strebe gebildet wird, die im wesentlichen in Längsrichtung ausgerichtet ist, so dass ausserhalb der Betätigung der Fahrgestellanordnung das Gehäuse (201), ausgehend von einer ausgefahrenen Fahrwerkstellung jeweils um die längsseitige Einziehachse (211) und den transversalen Zapfen (212) verschwenkbar ist, nach jeweiliger Auslösung der Energieaufnahmevorrichtung durch plastische Verformung des Hubzylinders und der Strebe.

18. Fahrgestellanordnung nach Anspruch 12 einer Bauart mit transversalem Einziehen im Rumpf, mit einem Hubzylinder (259, 260) zur Steuerung der Verschwenkung des Gehäuses (252) um die längsseitige Einziehachse (255), die fest mit dem Aufbau des Luftfahrzeuges verbunden ist, dadurch gekennzeichnet, dass das obere Ende des Gehäuses (252) schwenkbar auf einem im wesentlichen dreieckförmigen Kastenteil befestigt ist, der um die Schwenkachse (255) schwenkbar ist, und auf welchem ein Ende des Hubzylinders (259-260) schwenkbar angeordnet ist, so dass die Energieaufnahmevorrichtung mittels plastischer Verformung des Stossdämpfers und des Hubzylinders aufeinanderfolgend zur Aufnahme einer beträchtlichen Vertikalkomponente einer Kraft verwendet werden können, welche auf das Kontaktorgan (266) für Bodenkontakt einwirkt, wobei die seitliche Verbundanordnung und die längsseitige Verbundanordnung durch eine, bezogen auf das Gehäuse (252) gegen den Bug zugeneigte Strebe (273-274) und eine gegen das Heck zugeneigte Strebe (271-272) gewährleistet werden.

**Claims**

1. Component fulfilling a principal hydraulic and/or mechanical function, of the jack, damper or counter-brace type, comprising a tubular element (1, 51, 115, 151), inside which is received a telescopic element (2, 102, 154) immobilized with respect to the tubular element in at least one position of use by at least one locking device (23), characterized in that it also comprises a device for absorption of energy by plastic deformation and/or for effort limitation, comprising an assembly of rolling elements (19, 120, 160), retained by a cage (18, 121, 161), and interposed with tightening between an inner member (2) and an outer member (1) mounted one in the other, and of which at east the outer member (1) is a member with predetermined plastic deformation load, said members (1, 2) being capable of sliding one in the other after rupture of a breakable element (21-22, 118, 166) with predetermined breaking load included in the locking device (23), with the result that the rolling elements (19) provoke, in manner known per se, a dissipation of energy by plastic deformation of at least the outer member (1, 119, 162) which is fast with the tubular element (1, 51, 115, 151), the telescopic element (2, 102, 154) constituting the inner member which drives the retaining cage (18, 121, 161).

2. Component according to Claim 1, characterized in that the tubular element (1, 51) itself constitutes the plastically deformable outer member.

3. Component according to Claim 1, characterized in that the plastically deformable member is constituted by a sleeve (119, 162) lining the tubular element (115, 151) inside the latter, over at least a part of its length, with a sufficient radial clearance to allow the plastic deformation provoked by the rolling elements (120, 160) and removable to allow repair of the component by replacement of the sleeve (119, 162) and of at least the breakable element (118, 166).

4. Component according to one of Claims 1 to 3, characterized in that the tubular element and the telescopic element are respectively constituted by the body (151) and the rod (154) of a counter-brace, and the locking device and the breakable element are simultaneously constituted by at least one bolt (166) with partially threaded shank, screwed in one end of the body (151) traversed by the rod (154) and such that the end of the shank of the bolt (166) penetrates in the rod (154) in order to immobilize the latter with respect to the body (151) in an initial position in which a part of the rod (154) is received in the body (151), the cage (161) being fast with the end of the rod (154) inside the body (151) and the rolling elements (160) being in internal and external, respectively, radial abutment against the rod (154) and in an impression in the plastically deformable member, constituted either by the body (151) or by the sleeve (162) which is retained against the end of the body (151) traversed by the rod (154) by means of the shank of the or each bolt (166).

5. Component according to one of Claims 1 to 3, characterized in that the tubular element and the telescopic element are respectively constituted by a cylinder (1, 51) and a rod (2) of a hydraulic jack, one end of the rod (2) inside the cylinder (1, 51) bearing a piston (12) for guiding the rod (2) in the cylinder (1, 51), the locking devide comprising, in manner known per se, elastic claws (23) of which the heads are intended to be blocked against a step of the cylinder (1, 51) by at least one locking piston (34, 84) in order to immobilize the rod (2) in the cylinder (1, 51), and the breakable element being constituted by a radial heel, fast with the feet of the claws (23), and presenting an outer ring (22) separated by a section of rupture from an inner ring (21) driven by the rod (2) with the cage (18) fast with the end of the rod (2) inside the cylinder (1, 51).

6. Component according to Claim 5, characterized in that the rolling elements (19) are initially retained radially towards the inside in a groove (30) of a ring (28) sliding between the cage (18) and the rod (2) and urged elastically towards the outer ring (22) of the breakable element, the groove (30) joining, by an inclined ramp, a cylindrical portion (31) of the ring (28) which provokes, in the case of rupture of the breakable element, the departure of the rolling elements (19) from the groove (30) and their displacement on the inclined ramp then on the cylindrical portion (31) of the ring (28) by reason of the axial displacement of the cage (18) and the rod (2) with respect to the ring (28), which is elastically in abutment against the outer ring (22) until it is driven axially with the rod (2) by the inner ring (21), so that the rolling elements (19) are displaced radially towards the outside and in projection with respect to the cage (18) in order to provoke the plastic deformations of the deformable member.

7. Component according to Claim 6 and of which the outer member is the cylinder (1, 51) of the jack, characterized in that the cage (18), the rolling elements (19) and the ring (28) are initially surrounded by one end of the cylinder (1, 51) which presents a recess (41) extending axially over a sufficient distance to allow the coming of the rolling elements (19) into projection with respect to the cage (18), after rupture of the breakable element (21, 22) and an axial displacement of the rod (2) in the cylinder (1, 51).

8. Component according to one of Claims 1 to 3, characterized in that the tubular element and the telescopic element are respectively constituted by a damper body (115) and by a damper cylinder (102), at least partially housed in the body (115) and in which is slidably mounted with seal a rod (101) of the damper which furthermore comprises an elastic energy absorption device (110) returning the rod (101) into initial position in the cylinder (102), and a device (113) for dissipation of energy by flowing of hydraulic oil in the case of relative displacement of the rod (101) and of the cylinder (102), the locking device and the breakable element being simultaneously constituted by at least one bolt (118) with partially threaded shank passing through a radial bore in the body (115) and screwed in the cylinder (102).

9. Component according to Claim 8, characterized in that the rolling elements (120) are in radial abutment towards the inside in a groove in the cylinder (102) and are guided by the cage (121) to cooperate with the deformable member constituted either by the body (115) or by a sleeve (119) retained by at least the bolt or bolts (118) against the body (115).

10. Landing gear for aircraft, characterized in that it comprises at least one component according to one of preceding Claims 1 to 9.

11. Landing gear according to Claim 10, of the type comprising, for each landing gear, a shaft (201, 252) equipped with a damper having a rod (218, 264) of which the lower end bears at least one ground contact member (221, 266), the shaft being maintained in position of lading and take-off by a lateral bracing device and a longitudinal bracing device which are each articulated on the shaft and on the structure of the aircraft, characterized in that the damper is a component according to one of preceding Claims 8 and 9, of which the body directly constitutes the shaft (201, 252) and of which the breakable element breaks when the damper cylinder (217, 263) transmits to the shaft (201, 262) an effort greater than a threshold of blocking of the rod (218, 264) in the cylinder (217, 263) in order to trigger off functioning of the energy absorption device of the damper.

12. Landing gear according to Claim 11, characterized in that the lateral bracing device and/or the longitudinal bracing device comprise at least one bracing strut (207-208, 271-272, 273-274) according to preceding Claim 4, of which the device for absorption of energy plastic deformation triggers off when the effort supported by the bracing strut in the direction of bracing that it ensures is greater than the threshold of rupture of its breakable element.

13. Landing gear according to one of Claims 11 and 12, characterized in that the lateral bracing device and/or the longitudinal bracing device comprise at least one bracing jack (203-204), constituted by a component according to one of preceding Claims 5 to 7, of which the device for absorption of energy by plastic deformation triggers off when the effort supported by the jack in the direction of bracing that it ensures is greater than the threshold of rupture of its breakable element.

14. Landing gear according to Claim 13, of the so-called retractable type, characterized in that the bracing jack (203-204) constitutes simultaneously a manoeuvring jack, controlling the rotation of the shaft (201) about a retraction axis (212), between a position «gear in» and a position «gear out», as well, possibly, as the locking of the shaft (201) in these two positions.

15. Landing gear according to Claim 14, of the so-called rocking lever type, of which the damper rod (218) is articulated on a rocking lever (220) bearing the ground contact member (221) and mounted to pivot on a compass leg (216), connecting the rocking lever (220) to a fork joint (215) which surrounds the shaft (201), and on which the compass leg (216) is mounted to pivot, characterized in that the fork joint (215) and the shaft (201) are connected in rotation by at least a second breakable element (219) with predetermined breaking load less than the breaking load of the breakable element of the lateral bracing device, so that, if the transverse component of an effort stressing the ground contact member (221) and the rocking lever (220) exceeds a maximum admissible value, the second breakable element (219) breaks and disconnects in rotation the shaft (201) and the fork joint (215), allowing the orientation of the assembly constituted by the ground contact member (221), the rocking lever (220) and the damping rod (218) in the direction of this component, which is then absorbed by the devices for absorption of energy by plastic deformation of the lateral bracing device and/or of the damper, if the value of this component is greater than the threshold of the corresponding breakable element.

16. Landing gear according to one of Claims 14 and 15, of the so-called longitudinal retractable type, of which the shaft (201) is fast with a transverse retraction spindle (212) mounted to pivot on the structure of the aircraft, characterized in that the jack (203-204) is disposed in a substantially longitudinal direction, the shaft (201) is mounted to pivot on the retraction spindle (212) about a longitudinal journal (211), and lateral bracing is ensured by the bracing strut (207-208) disposed in a transverse plane, so that, apart from the manoeuvres of the gear, the shaft (201) may pivot, from the position «gear out», respectively about the transverse retraction spindle (212) and the longidutinal journal (211) after the respective triggerings of the devices for absorption of energy by plastic deformation of the jack (203-204) and of the bracing strut (207-208).

17. Landing gear according to one of Claims 14 and 15, of the so-called transverse retractable type, of which the shaft (201) is fast with a longitudinal retraction spindle (211) mounted to pivot on the structure of the aircraft, characterized in that the jack is disposed in a substantially transverse plane, the shaft (201) is mounted to pivot on the retraction spindle (211) about a transverse journal (212), and longitudinal bracing is ensured by a bracing strut disposed in a substantially longitudinal direction, so that, apart from the manoeuvres of the gear, the shaft (201) may pivot, from the «gear out» position, respectively about the longitudinal retraction spindle (211) and the transverse journal (212) after the respective triggerings of the devices for absorption of energy by plastic deformation of the jack and of the bracing strut.

18. Landing gear according to Claim 12, of the type retracting transversely in the fuselage, comprising a jack (259, 260) controlling the manoeuvre of the shaft (252) about a longitudinal retraction spindle (255) fast with the structure of the aircraft, characterized in that the upper end of the shaft (252) is mounted to pivot on a caisson (251) generally triangular in form, pivoting about the retraction spindle (255), and on which is articulated one end of the jack (259-260), so that the device for absorption of energy by plastic deformation of the damper and of the jack may be successively used for the absorption of a considerable vertical component of an effort stressing the ground contact member (266), lateral bracing and longitudinal bracing being ensured by a forwardly inclined bracing strut (273-274) and a rearwardly inclined bracing strut (271-272) of the aircraft with respect to the shaft (252).

0 072 323

_Fig.1_

_Fig.2_

_Fig.3_

_Fig.4_

_Fig.5_

_Fig.6_

0 072 323

*Fig.7*

*Fig.8*

_Fig. 9_

_Fig. 10_

_Fig.11_

*Fig.* 12

*Fig.13*

*Fig.14*

*Fig.15*

XVII

253

256

257

258

251

252

259

269

262

271

272

266

260

261

XVII

*Fig.16*

255

251

254

258

259

260

256

253

252

257

275

272

271

269

262

263

264

267

268

265

266

261

Fig.17

Fig.18